# FASCICULE DE BREVET EUROPEEN

(11) **EP 2 388 899 B1**
(45) Date de publication et mention de la délivrance du brevet: **14.01.2015**
(21) Numéro de dépôt: 11354009.0
(22) Date de dépôt: 24.03.2011
(51) Int. Cl.: H02M 1/34, H02M 7/48

(54) **Dispositif convertisseur et alimentation sans interruption équipée d'un tel dispositif**
Stromumwandlungsvorrichtung und unterbrechungsfreie Stromversorgung, die eine solche Vorrichtung umfasst
Converter device and uninterruptible power supply comprising such a device

(30) Priorité: 26.04.2010 FR 1001769
(43) Date de publication de la demande: 23.11.2011
(73) Titulaire: MGE UPS Systems, 38330 Montbonnot-Saint-Martin (FR)
(72) Inventeur: Rizet, Corentin, 38050 Grenoble Cedex 09 (FR)
(74) Mandataire: Tripodi, Paul

(56) Documents cités:
- EP-A2- 2 141 794
- FR-A1- 2 936 113
- JP-A- 2005 110 336
- JP-A- 2008 067 566
- US-A1- 2005 105 314
- US-A1- 2010 039 843

## Description

### DOMAINE TECHNIQUE DE L'INVENTION

L'invention relève du domaine des convertisseurs, tels que les convertisseurs de type élévateur et les convertisseurs de type abaisseur, ainsi que les redresseurs et les onduleurs, par exemple ceux utilisés dans les alimentations sans interruption, en particulier dans les alimentations sans interruption de forte puissance, c'est-à-dire dont la puissance est généralement comprise entre environ 100 et 500 kVA.

La demande de brevet publiée US 20100039843 divulgue un convertisseur ayant toutes les caractéristiques du préambule de la revendication 1.

L'invention concerne, plus particulièrement, un dispositif convertisseur permettant de transformer des premiers potentiels électriques disponibles sur une première, une seconde et une troisième ligne de tension d'un premier type, en une tension sur une ligne de tension d'un second type, dans un sens ou dans l'autre, ledit dispositif comprenant :
- une première unité de commutation principale connectée à ladite première ligne de tension du premier type et équipée d'un premier interrupteur principal,
- une seconde unité de commutation principale connectée à ladite seconde ligne de tension du premier type et équipée d'un second interrupteur principal,
- un point de commutation principal raccordé à ladite ligne de tension du second type et connectée à ladite première et à ladite seconde unité de commutation principale, et
- un troisième interrupteur principal commun à ladite première et à ladite seconde unité de commutation principale, ledit troisième interrupteur principal étant connecté entre ledit point de commutation principal et la troisième ligne de tension du premier type.

L'invention concerne également une alimentation sans interruption comprenant une entrée d'alimentation sur laquelle est appliquée une tension d'entrée alternative, un redresseur connecté à ladite entrée, deux lignes de tensions sensiblement continues de signes opposés connectées en sortie dudit redresseur, un onduleur connecté aux dites lignes de tension de tension sensiblement continue et comportant une sortie destinée à fournir une tension sécurisée.

### ÉTAT DE LA TECHNIQUE

Les convertisseurs sont développés pour améliorer leur rendement et pour réduire les nuisances sonores engendrées par des fréquences de découpage souvent basses, de l'ordre de quelques milliers d'hertz. Dans ce contexte, il a été montré qu'il était intéressant d'utiliser des onduleurs présentant des topologies sur plusieurs niveaux, généralement trois niveaux.

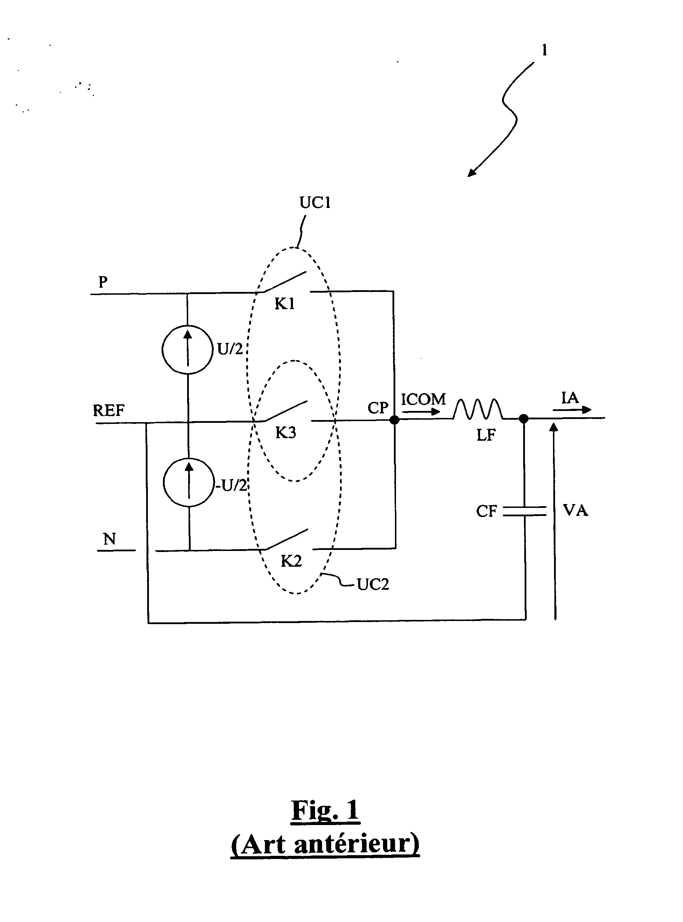

En référence à la figure 1 selon l'art antérieur, un convertisseur à trois niveaux représenté sous la référence 1 permet de transformer des niveaux de tension électriques U/2, -U/2, UREF disponibles sur une première, une seconde et une troisième ligne de tension d'un premier type P, N, REF en une tension VA sur une ligne de tension d'un second type A, dans un sens ou dans l'autre. Dans le cas représenté, les lignes de tension du premier type sont des lignes ayant des niveaux de tension sensiblement continue et les lignes de tensions du second type sont des lignes où la tension est alternative. Dans un sens correspondant à un fonctionnement en mode onduleur, la tension VA et le courant IA sont alternatifs et sont obtenus par filtrage d'impulsions sur un point de commutation principal CP, à partir des trois niveaux de tension sensiblement continue U/2, -U/2, UREF. Dans l'autre sens, correspondant à un fonctionnement en tant que redresseur, les niveaux de tension sensiblement continue U/2, -U/2, UREF sont obtenus à partir de la tension VA et du courant IA alternatifs. Les moyens de filtrage utilisés comportent une inductance LF connectée entre le point de commutation principal CP et la ligne de tension d'un second type A. Les moyens de filtrage comportent également un condensateur CF qui est connecté entre la sortie de tension VA alternative et un point de référence de tension présentant un même potentiel électrique que la ligne de tension de référence REF.

Le convertisseur représenté à la figure 1 comprend deux unités de commutation principales UC1, UC2 commandées par l'entremise d'une unité de commande non représentée. Les unités de commutation UC1, UC2 comprennent respectivement une entrée de tension continue positive et une entrée de tension continue négative connectées à respectivement la première et la seconde ligne de tension du premier type P, N. Chaque unité de commutation UC1, UC2 est connectée, d'un côté, à la première ou la seconde ligne de tension du premier type P, N et à la troisième ligne de tension du premier type, et de l'autre côté, au point de commutation principal CP. La première unité de commutation UC1 comprend un premier interrupteur principal K1 connecté entre la première ligne de tension du premier type P et le point de commutation principal CP. De la même façon, la seconde unité de commutation UC2 comprend un second interrupteur principal K2 connecté entre la seconde ligne de tension du premier type N et le point de commutation principal CP. Le convertisseur comprend un troisième interrupteur principal K3 commun à la première et à la seconde unité de commutation, et connecté entre le point de commutation principal CP et la troisième ligne de tension du premier type REF. Chacun des interrupteurs principaux K1, K2, K3 peuvent comporter au moins un transistor et au moins une diode montée en parallèle sur ledit transistor et orientée pour conduire lorsque ledit transistor est polarisé en inverse.

Lors de la fermeture de l'interrupteur principal K1, respectivement K2, la tension sur le point de commutation principal CP est sensiblement égale à la tension continue +U/2, respectivement -U/2, disponible sur la première ligne de tension du premier type P, respectivement la seconde ligne de tension du premier type N. Cet état de conduction de l'interrupteur principal K1, respectivement K2, correspond à un premier état de commutation de l'unité de commutation UC1, respectivement UC2. Dans ce premier état de commutation, l'interrupteur principal K1, respectivement K2, peut transférer la puissance de la première ligne de tension du premier type P, respectivement de la seconde ligne de tension du premier type N, vers le point de commutation principal CP. Lorsque l'interrupteur principal K1, respectivement K2, est ouvert, le troisième interrupteur principal K3 permet de faire passer la tension sur la ledit point de commutation principal CP à une valeur sensiblement égale à la tension disponible sur ladite troisième ligne de tension, en l'occurrence une tension de référence, ce qui correspond à un second état de commutation de l'unité de commutation UC1, respectivement UC2.

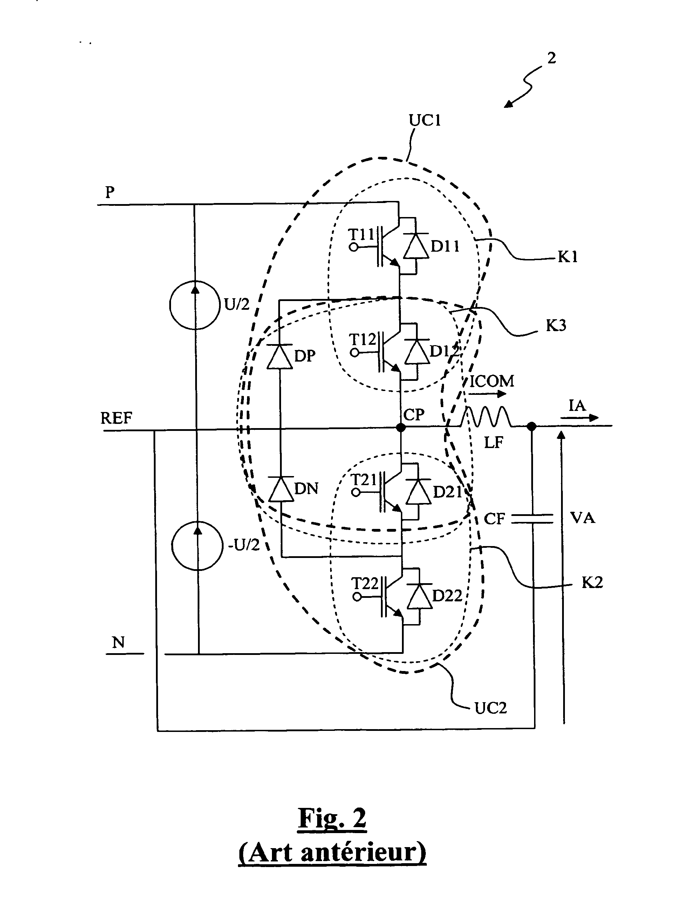

En référence à la figure 2 selon l'art antérieur, un autre convertisseur à trois niveaux est représenté sous la référence 2. Ce convertisseur présente une topologie qualifiée en anglais de « Neutral Point Clamped topology », ou en abrégé « NPC ». Ce convertisseur permet également de transformer des niveaux de tension électriques U/2, -U/2, UREF sensiblement continue sur une première, une seconde et une troisième ligne de tension d'un premier type P, N, REF en une tension alternative VA sur une ligne de tension d'un second type A, dans un sens ou dans l'autre.

Le convertisseur représenté à la figure 2 comprend également deux unités de commutation principales UC1, UC2. Les unités de commutation UC1, UC2 comprennent respectivement une entrée de tension continue positive et une entrée de tension continue négative connectées à respectivement la première et la seconde ligne de tension du premier type P, N. La première unité de commutation UC1 comprend un premier interrupteur principal K1 connecté entre la première ligne de tension du premier type P et le point de commutation principal CP. De la même façon, la seconde unité de commutation UC2 comprend un second interrupteur principal K2 connecté entre la seconde ligne de tension du premier type N et le point de commutation principal CP. Le convertisseur comprend un troisième interrupteur principal K3 commun à la première et à la seconde unité de commutation, et connecté entre le point de commutation principal CP et la troisième ligne de tension du premier type REF.

Dans le convertisseur représenté à la figure 2, le premier interrupteur principal K1 comporte :
- un premier transistor T11 orienté pour passer le courant de la première ligne de tension du premier type vers le point de commutation principal CP,
- un second transistor T12 monté en série avec ledit premier transistor et orienté dans le même sens,
- une première diode D11 montée en parallèle sur ledit premier transistor et orientée pour conduire lorsque ledit premier transistor est polarisé en inverse, et
- une seconde diode D12 montée en parallèle sur ledit second transistor et orientée pour conduire lorsque ledit second transistor est polarisé en inverse.

De la même façon, le second interrupteur principal K2 comporte :
- un premier transistor T22 orienté pour passer le courant du point de commutation principal CP vers la seconde ligne de tension du premier type,
- un second transistor T21 monté en série avec ledit premier transistor et orienté dans le même sens,
- une première diode D22 montée en parallèle sur ledit premier transistor et orientée pour conduire lorsque ledit premier transistor est polarisé en inverse, et
- une seconde diode D21 montée en parallèle sur ledit second transistor et orientée pour conduire lorsque ledit second transistor est polarisé en inverse.

Le transistor T12, T21 de chaque unité de commutation principales UC1, UC2 permet essentiellement, lorsqu'il est passant, d'activer la commutation de ladite unité de commutation en fonction du signe de la tension alternative VA. Le transistor T12, T21 de chaque unité de commutation UC1, UC2 permet, entre autres, d'activer le passage du premier état de commutation à un second état de commutation de ladite unité de commutation, lorsque la tension alternative VA est de même signe que la tension disponible sur l'entrée P, N de ladite unité de commutation.

Le troisième interrupteur principal K3 comporte, quant à lui, les seconds transistors T12, T21 du premier et du second interrupteur principal K1, K2, ainsi que les secondes diodes D12, D21 montées en parallèle sur lesdits seconds transistors. Le troisième interrupteur principal comporte, en outre, des diodes DP, DN connectées entre la troisième ligne de tension du premier type, en l'occurrence la ligne de tension de référence REF, et les lignes de connexion entre les premiers et les seconds transistors T11, T22, T12, T21 du premier et du second interrupteur principal K1, K2. Plus précisément, le second transistor T12, respectivement T21, et la diode DP, respectivement DN, du troisième interrupteur principal K3 sont connectées en série entre la troisième ligne de tension du premier type, en l'occurrence la ligne de tension de référence REF, et le point de commutation principal CP. La diode DP, DN permet de passer du premier état de commutation au second état de commutation, lors du blocage du premier transistor T11, T22. Ce second état de commutation associé au blocage du premier transistor T11, T22 permet, lorsque le second transistor T12, T21 est conducteur, d'obtenir sur le point de commutation principal CP une tension sensiblement égale à la tension sur la troisième ligne de tension du premier type, en l'occurrence la tension de référence UREF. De cette façon, le premier transistor T11, T22 du premier ou du second interrupteur principal permet de fournir, sur le point de commutation principal CP, des impulsions ayant une amplitude variant entre une valeur de la tension sur la première ou la seconde ligne de tension du premier type, dans le premier état de commutation, et une valeur de la tension sur la troisième ligne de tension du premier type, dans le second état de commutation.

Un inconvénient des convertisseurs de l'art antérieur est lié aux pertes de puissance lors des commutations des interrupteurs principaux de leurs unités de commutation. La demande de brevet française FR2936113 décrit un convertisseur tel que décrit ci-dessus auquel a été rajouté un circuit d'aide à la commutation permettant d'obtenir des commutations douces, notamment en fermant les interrupteurs principaux de leurs unités de commutation principales sous une tension nulle et en obtenant une démagnétisation complète desdits circuits d'aide à la commutation. Cependant ces circuits d'aide à la commutation ne permettent pas de réaliser une commutation douce sur l'ensemble des interrupteurs principaux des unités de commutation principales, et notamment dans le cas où la puissance convertie comporte une composante réactive non négligeable.

### EXPOSÉ DE L'INVENTION

L'invention vise à apporter une solution aux problèmes des convertisseurs de l'art antérieur en proposant un dispositif convertisseur permettant de transformer des niveaux de tension électrique disponibles sur une première, une seconde et une troisième ligne de tension d'un premier type, en une tension sur une ligne de tension d'un second type, dans un sens ou dans l'autre, ledit dispositif comprenant :
- une première unité de commutation principale connectée à ladite première ligne de tension du premier type et équipée d'un premier interrupteur principal,
- une seconde unité de commutation principale connectée à ladite seconde ligne de tension du premier type et équipée d'un second interrupteur principal,
- un point de commutation principal raccordé à ladite ligne de tension du second type et connectée à ladite première et à ladite seconde unité de commutation principale, et
- un troisième interrupteur principal commun à ladite première et à ladite seconde unité de commutation principale, ledit troisième interrupteur principal étant connecté entre ledit point de commutation principal et la troisième ligne de tension du premier type,

ledit dispositif convertisseur étant caractérisé en ce qu'il comprend:
- un premier, un second et un troisième condensateur connectés entre ledit point de commutation principal et respectivement ladite première, ladite seconde et ladite troisième ligne de tension du premier type,
- une première unité de commutation auxiliaire connectée entre la première ligne de tension du premier type, la seconde ligne de tension du premier type, et un premier point de commutation auxiliaire,
- une seconde unité de commutation auxiliaire connectée entre la première ligne de tension du premier type, la seconde ligne de tension du premier type, la troisième ligne de tension du premier type et un second point de commutation auxiliaire, et
- un transformateur équipé d'enroulements pourvus de deux extrémités libres et de deux extrémités connectées en un point commun, ledit point commun étant raccordé au dit point de commutation principal, les deux extrémités libres étant raccordées à respectivement ledit premier point et ledit second point de commutation auxiliaire.

De préférence, la première unité de commutation auxiliaire comporte:
- un premier interrupteur auxiliaire de ladite première unité de commutation auxiliaire connecté entre la première ligne de tension du premier type et le premier point de commutation auxiliaire, et
- un second interrupteur auxiliaire de ladite première unité de commutation auxiliaire connecté entre la seconde ligne de tension du premier type et ledit premier point de commutation auxiliaire.

De préférence, la seconde unité de commutation auxiliaire comporte:
- un premier interrupteur auxiliaire de ladite seconde unité de commutation auxiliaire connecté entre la première ligne de tension du premier type et le second point de commutation auxiliaire,
- un second interrupteur auxiliaire de ladite seconde unité de commutation auxiliaire connecté entre la seconde ligne de tension du premier type et ledit second point de commutation auxiliaire, et
- un troisième interrupteur auxiliaire de ladite seconde unité de commutation auxiliaire connecté entre la troisième ligne de tension du premier type et ledit second point de commutation auxiliaire.

Selon un mode de réalisation, le dispositif convertisseur est caractérisé en ce que:
- le premier interrupteur auxiliaire de la seconde unité de commutation auxiliaire étant une diode orientée pour transférer la puissance du second point de commutation auxiliaire vers la première ligne de tension du premier type, et
- le second interrupteur auxiliaire de ladite seconde unité de commutation auxiliaire étant une diode orientée pour transférer la puissance de la seconde ligne de tension du premier type vers ledit second point de commutation auxiliaire.

Selon un mode de réalisation, le dispositif convertisseur est caractérisé en ce que:
- le premier interrupteur principal est un transistor connecté à la première ligne de tension du premier type et orienté pour transférer la puissance de ladite ligne vers le point de commutation principal,
- le second interrupteur principal étant une diode connectée à la seconde ligne de tension du premier type et orientée pour transférer la puissance de ladite ligne vers le point de commutation principal,
- le troisième interrupteur principal comportant un transistor orienté pour transférer la puissance de la troisième ligne de tension du premier type vers ledit point de commutation principal et une diode montée en série avec ledit transistor et orientée de la même façon,
- le premier interrupteur auxiliaire de la première unité de commutation auxiliaire étant un transistor orienté pour transférer la puissance de la première ligne de tension du premier type vers le premier point de commutation auxiliaire,
- le second interrupteur auxiliaire de ladite première unité de commutation auxiliaire étant une diode orientée pour transférer la puissance de la seconde ligne de tension du premier type vers ledit premier point de commutation auxiliaire,
- le premier interrupteur auxiliaire de la seconde unité de commutation auxiliaire étant une diode orientée pour transférer la puissance du second point de commutation auxiliaire vers la première ligne de tension du premier type,
- le second interrupteur auxiliaire de ladite seconde unité de commutation auxiliaire étant une diode orientée pour transférer la puissance de la seconde ligne de tension du premier type vers ledit second point de commutation auxiliaire,
- le troisième interrupteur auxiliaire de ladite seconde unité de commutation auxiliaire comportant un transistor orienté pour transférer la puissance de la troisième ligne de tension du premier type vers ledit second point de commutation auxiliaire et une diode montée en série avec ledit transistor et orientée de la même façon.

Selon un mode de réalisation, le dispositif convertisseur est caractérisé en ce que:
- le premier interrupteur principal est une diode connectée à la première ligne de tension du premier type et orientée pour transférer la puissance du point de commutation principal vers ladite ligne,
- le second interrupteur principal étant un transistor connecté à la seconde ligne de tension du premier type et orienté pour transférer la puissance dudit point de commutation principal vers ladite ligne,
- le troisième interrupteur principal comportant un transistor orienté pour transférer la puissance dudit point de commutation principal vers la troisième ligne de tension du premier type et une diode montée en série avec ledit transistor et orientée de la même façon,
- le premier interrupteur auxiliaire de la première unité de commutation auxiliaire étant une diode orientée pour transférer la puissance du premier point de commutation auxiliaire vers la première ligne de tension du premier type,
- le second interrupteur auxiliaire de ladite première unité de commutation auxiliaire étant un transistor orienté pour transférer la puissance dudit premier point de commutation auxiliaire vers la seconde ligne de tension du premier type,
- le premier interrupteur auxiliaire de la seconde unité de commutation auxiliaire étant une diode orientée pour transférer la puissance du second point de commutation auxiliaire vers la première ligne de tension du premier type,
- le second interrupteur auxiliaire de ladite seconde unité de commutation auxiliaire étant une diode orientée pour transférer la puissance de la seconde ligne de tension du premier type vers ledit second point de commutation auxiliaire,
- le troisième interrupteur auxiliaire de ladite seconde unité de commutation auxiliaire comportant un transistor orienté pour transférer la puissance dudit second point de commutation auxiliaire vers la troisième ligne de tension du premier type et une diode montée en série avec ledit transistor et orientée de la même façon.

Selon un mode de réalisation, le dispositif convertisseur est caractérisé en ce que :
- le premier interrupteur principal est un transistor connecté à la première ligne de tension du premier type et orienté pour transférer la puissance de ladite ligne vers le point de commutation principal,
- le second interrupteur principal étant un transistor connecté à la seconde ligne de tension du premier type et orienté pour transférer la puissance dudit point de commutation principal vers ladite ligne,
- le troisième interrupteur principal comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire étant un transistor orienté pour transférer la puissance de la première ligne de tension du premier type vers le premier point de commutation auxiliaire,
- le second interrupteur auxiliaire de ladite première unité de commutation auxiliaire étant un transistor orienté pour transférer la puissance dudit premier point de commutation auxiliaire vers la seconde ligne de tension du premier type,
- le premier interrupteur auxiliaire de la seconde unité de commutation auxiliaire étant une diode orientée pour transférer la puissance du second point de commutation auxiliaire vers la première ligne de tension du premier type,
- le second interrupteur auxiliaire de ladite seconde unité de commutation auxiliaire étant une diode orientée pour transférer la puissance de la seconde ligne de tension du premier type vers ledit second point de commutation auxiliaire,
- le troisième interrupteur auxiliaire de ladite seconde unité de commutation auxiliaire comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse.

Selon un mode de réalisation, le dispositif convertisseur est caractérisé en ce que :
- le premier interrupteur principal est une diode connectée à la première ligne de tension du premier type et orientée pour transférer la puissance du point de commutation principal vers ladite ligne,
- le second interrupteur principal étant une diode connectée à la seconde ligne de tension du premier type et orientée pour transférer la puissance de ladite ligne vers ledit point de commutation principal,
- le troisième interrupteur principal comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire étant une diode orientée pour transférer la puissance du premier point de commutation auxiliaire vers la première ligne de tension du premier type,
- le second interrupteur auxiliaire de ladite première unité de commutation auxiliaire étant une diode orientée pour transférer la puissance de la seconde ligne de tension du premier type vers ledit premier point de commutation auxiliaire,
- le premier interrupteur auxiliaire de la seconde unité de commutation auxiliaire étant une diode orientée pour transférer la puissance du second point de commutation auxiliaire vers la première ligne de tension du premier type,
- le second interrupteur auxiliaire de ladite seconde unité de commutation auxiliaire étant une diode orientée pour transférer la puissance de la seconde ligne de tension du premier type vers ledit second point de commutation auxiliaire,
- le troisième interrupteur auxiliaire de ladite seconde unité de commutation auxiliaire comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse.

Selon un mode de réalisation, le dispositif convertisseur est caractérisé en ce que:
- le premier interrupteur principal comporte un transistor orienté pour transférer la puissance de la première ligne de tension du premier type vers le point de commutation principal et une diode montée en parallèle sur ledit transistor et orientée pour conduire lorsque ledit transistor est polarisé en inverse,
- le second interrupteur principal comportant un transistor orienté pour transférer la puissance du point de commutation principal vers la seconde ligne de tension du premier type et une diode montée en parallèle sur ledit transistor et orientée pour conduire lorsque ledit transistor est polarisé en inverse,
- le troisième interrupteur principal comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire comportant un transistor orienté pour transférer la puissance de la première ligne de tension du premier type vers le premier point de commutation auxiliaire et une diode montée en parallèle sur ledit transistor et orientée pour conduire lorsque ledit transistor est polarisé en inverse,
- le second interrupteur auxiliaire de ladite première unité de commutation auxiliaire comportant un transistor orienté pour transférer la puissance dudit premier point de commutation principal vers la seconde ligne de tension du premier type et une diode montée en parallèle sur ledit transistor et orientée pour conduire lorsque ledit transistor est polarisé en inverse,
- le premier interrupteur auxiliaire de la seconde unité de commutation auxiliaire étant une diode orientée pour transférer la puissance du second point de commutation auxiliaire vers la première ligne de tension du premier type,
- le second interrupteur auxiliaire de ladite seconde unité de commutation auxiliaire étant une diode orientée pour transférer la puissance de la seconde ligne de tension du premier type vers ledit second point de commutation auxiliaire,
- le troisième interrupteur auxiliaire de ladite seconde unité de commutation auxiliaire comportant deux transistors orientés dans des sens opposés et deux diodes montées en parallèle sur respectivement lesdits transistors, chacune des dites diodes étant orientée pour conduire lorsque le transistor en parallèle duquel elle est montée est polarisé en inverse.

De préférence:
- le premier interrupteur principal comporte un premier transistor connecté à la première ligne de tension du premier type et orienté pour transférer la puissance de ladite ligne vers le point de commutation principal, un second transistor monté en série avec ledit premier transistor et orienté dans le même sens, une première et une seconde diode montées en parallèle sur respectivement ledit premier et ledit second transistor, chacune des dites diodes étant orientée pour conduire lorsque le transistor en parallèle duquel elle est montée est polarisé en inverse,
- le second interrupteur principal comportant un premier transistor connecté à la seconde ligne de tension du premier type et orienté pour transférer la puissance dudit point de commutation principal vers ladite ligne, un second transistor monté en série avec ledit premier transistor et orienté dans le même sens, une première et une seconde diode montées en parallèle sur respectivement ledit premier et ledit second transistor, chacune des dites diodes étant orientée pour conduire lorsque le transistor en parallèle duquel elle est montée est polarisé en inverse,
- le troisième interrupteur principal comporte lesdits seconds transistors, lesdites secondes diodes et des diodes connectées entre la troisième ligne de tension du premier type et des lignes de connexion entre lesdits premiers et lesdits seconds transistors.

De préférence:
- le premier interrupteur auxiliaire de la première unité de commutation auxiliaire comporte un transistor orienté pour transférer la puissance de la première ligne de tension du premier type vers le premier point de commutation auxiliaire et une diode montée en parallèle sur ledit transistor et orientée pour conduire lorsque ledit transistor est polarisé en inverse,
- le second interrupteur auxiliaire de ladite première unité de commutation auxiliaire comportant un transistor orienté pour transférer la puissance dudit premier point de commutation auxiliaire vers la seconde ligne de tension du premier type et une diode montée en parallèle sur ledit transistor et orientée pour conduire lorsque ledit transistor est polarisé en inverse.

De préférence:
- le premier interrupteur auxiliaire de ladite seconde unité de commutation auxiliaire comporte une première diode connectée à la première ligne de tension du premier type orientée pour transférer la puissance du second point de commutation auxiliaire vers ladite ligne, un premier transistor monté en série avec ladite première diode et orienté dans un sens opposé, et une seconde diode montée en parallèle sur ledit premier transistor et orientée pour conduire lorsque ledit premier transistor est polarisé en inverse,
- le second interrupteur auxiliaire de ladite seconde unité de commutation auxiliaire comportant une première diode connectée à la seconde ligne de tension du premier type orientée pour transférer la puissance de ladite ligne vers ledit second point de commutation auxiliaire, un premier transistor monté en série avec ladite première diode et orienté dans un sens opposé, et une seconde diode montée en parallèle sur ledit premier transistor et orientée pour conduire lorsque ledit premier transistor est polarisé en inverse,
- le troisième interrupteur de ladite seconde unité de commutation auxiliaire comportant lesdits premiers transistors, lesdites secondes diodes et des diodes connectées entre la troisième ligne de tension du premier type et des lignes de connexion entre lesdites premières et lesdites secondes diodes.

De préférence, les enroulements du transformateur possèdent un nombre de spires sensiblement égal.

L'invention concerne également une alimentation sans interruption comprenant une entrée d'alimentation sur laquelle est appliquée une tension d'entrée alternative, un redresseur connecté à ladite entrée, deux lignes de tension sensiblement continue de signes opposés connectées en sortie dudit redresseur, un onduleur connecté aux dites lignes de tension de tension sensiblement continue et comportant une sortie destinée à fournir une tension sécurisée, ladite alimentation étant caractérisée en ce que ledit onduleur est un dispositif convertisseur tel que décrit précédemment et fournit à partir des tensions sensiblement continues une tension sécurisée alternative.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente un modèle classique d'un convertisseur à trois niveaux.
La figure 2 représente un convertisseur à trois niveaux selon l'art antérieur présentant une topologie « NPC ».
La figure 3 représente un modèle de convertisseur à trois niveaux selon l'invention.
La figure 4 représente un modèle de convertisseur similaire à celui représenté à la figure 3, dans lequel le premier et le second interrupteur de la seconde unité de commutation auxiliaire ont été remplacés par des diodes.
La figure 5 représente un convertisseur DC/DC selon l'invention de type abaisseur.
La figure 6 représente un convertisseur DC/DC selon l'invention de type élévateur.
La figure 7 représente un onduleur selon l'invention comportant un facteur de puissance unitaire.
La figure 8 représente un redresseur selon l'invention permettant une correction du facteur de puissance.
La figure 9 représente un convertisseur réversible selon l'invention permettant un fonctionnement en mode onduleur ou en mode redresseur.
La figure 10 représente un convertisseur réversible selon l'invention présentant une topologie « NPC ».
Les figures 11A à 11Q sont des chronogrammes illustrant le fonctionnement du dispositif convertisseur représenté à la figure 4.
La figure 12 est un chronogramme du courant circulant dans le transformateur pour illustrer le fonctionnement du dispositif convertisseur représenté à la figure 4 lorsque le courant dans la charge est négatif.
La figure 13 représente une alimentation sans interruption selon l'invention.

### DESCRIPTION DETAILLEE D'UN MODE DE RÉALISATION

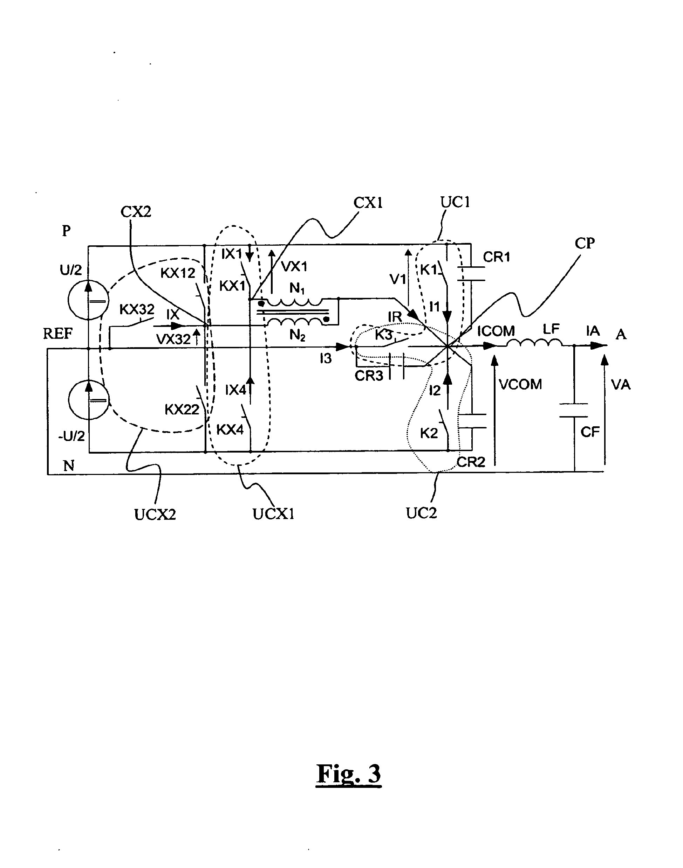

En référence à la figure 3, le dispositif convertisseur comprends les éléments représentés sur la figure 1, sous les mêmes références numériques.

Le dispositif convertisseur représenté à la figure 3 comprend, en outre, un premier, un second et un troisième condensateur CR1, CR2, CR3 connectés entre le point de commutation principal CP et respectivement la première, la seconde et la troisième ligne de tension du premier type P, N, REF. Ces condensateurs permettent d'amortir les tensions lors de l'ouverture des interrupteurs principaux K1, K2, K3.

Le dispositif convertisseur représenté à la figure 3 comprend, en outre, une première unité de commutation auxiliaire UCX1 à deux niveaux connectée entre la première ligne de tension du premier type P, la seconde ligne de tension du premier type N, et un premier point de commutation auxiliaire CX1. Cette première unité de commutation auxiliaire UCX1 comporte un premier interrupteur auxiliaire KX1 connecté entre la première ligne de tension du premier type P et le premier point de commutation auxiliaire CX1, et un second interrupteur auxiliaire KX4 connecté entre la seconde ligne de tension du premier type N et ledit premier point de commutation auxiliaire CX1.

Le dispositif convertisseur représenté à la figure 3 comprend, en outre, une seconde unité de commutation auxiliaire UCX2 à trois niveaux connectée entre la première ligne de tension du premier type P, la seconde ligne de tension du premier type N, la troisième ligne de tension du premier type REF et un second point de commutation auxiliaire CX2. Cette seconde unité de commutation auxiliaire UCX2 comporte un premier interrupteur auxiliaire KX12 connecté entre la première ligne de tension du premier type P et le second point de commutation auxiliaire CX2, un second interrupteur auxiliaire KX22 connecté entre la seconde ligne de tension du premier type N et ledit second point de commutation auxiliaire CX2, et un troisième interrupteur auxiliaire KX32 connecté entre la troisième ligne de tension du premier type REF et ledit second point de commutation auxiliaire CX2.

Le dispositif convertisseur représenté à la figure 3 comprend, en outre, un transformateur équipé de deux enroulements N1, N2. Deux extrémités libres de ces enroulements N1, N2 sont raccordées à respectivement le premier point et le second point de commutation auxiliaire CX1, CX2. Les deux autres extrémités de ces enroulement N1, N2 sont, quant à elles, connectées en un point commun, qui est lui-même raccordé au point de commutation principal CP.

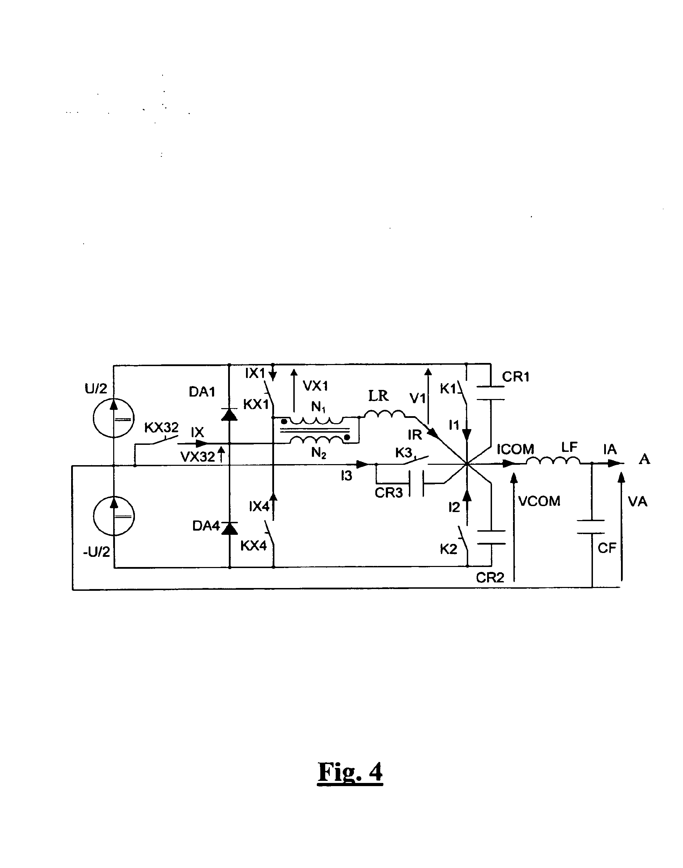

Le transformateur utilisé est généralement un autotransformateur, c'est-à-dire qu'il s'agit d'un transformateur sans isolement entre l'enroulement primaire et secondaire. Les enroulements N1, N2 sont généralement bobinés dans le sens inverse. La fonction principale du transformateur N1, N2 est d'agir comme une source de tension pour dériver le courant principal passant par le point de commutation principal CP, avant la fermeture d'un des interrupteurs principaux K1, K2, K3. La variation du courant IR circulant dans le transformateur N1, N2 est généralement régie par un phénomène de résonnance grâce à l'inductance de fuite du transformateur N1, N2, à laquelle peut s'ajouter l'inductance d'un composant inductif LR connecté entre le point commun des enroulements N1, N2 et le point de commutation principale CP (figure 4). La tension aux bornes des interrupteurs principaux K1, K2, K3 peut donc être annulée par un phénomène de résonnance entre l'inductance de fuite du transformateur, éventuellement l'inductance LR, et les condensateurs CR1, CR2, CR3. De cette façon, les pertes de puissance lors de la fermeture des interrupteurs principaux peuvent être réduites. Les condensateurs CR1, CR2, CR3 permettent également de réduire les pertes de puissance lors de l'ouverture des interrupteurs principaux K1, K2, K3.

Le dispositif convertisseur permet d'ouvrir les interrupteurs auxiliaires KX1, KX4, KX12, KX22, KX32 de la première et de la seconde unité de commutation auxiliaire sous courant nul. Le dispositif convertisseur permet également de fermer ces interrupteurs auxiliaires KX1, KX4, KX12, KX22, KX32 avec une variation contrôlée du courant circulant dans lesdits interrupteurs, grâce à l'inductance de fuite du transformateur N1, N2.

Dans le mode de réalisation représenté à la figure 4, le premier et le second interrupteur de la seconde unité de commutation auxiliaire ont été remplacés par des diodes. De plus, une inductance LR à été rajoutée entre le point commun des enroulements N1, N2 du transformateur et le point de commutation principal CP. Cette inductance LR peut correspondre à l'inductance de fuite de transformateur, auquel cas la figure 4 montre un modèle du transformateur et l'inductance LR ne correspond pas à un composant inductif particulier. Dans ce cas, le point commun des enroulements N1, N2 du transformateur est directement connecté au point de commutation principal CP. L'inductance LR représentée sur la figure 4 peut également correspondre à un composant réel. Dans ce dernier cas, l'inductance LR vient s'ajouter à l'inductance de fuite du transformateur, et le point commun des enroulements N1, N2 du transformateur est raccordé au point de commutation principal CP au moyen de cette inductance LR. Dans tous les modes de réalisation décrits ci-après, une inductance LR peut être connectée entre le point commun des enroulements N1, N2 du transformateur et le point de commutation principal CP.

Les diodes DA1, DA4 sont utiles pour protéger le troisième interrupteur auxiliaire KX32, pendant la démagnétisation du transformateur N1, N2. Cette démagnétisation est permise lorsque la tension VCOM au point de commutation principal CP est nulle. De cette façon, un très faible courant IR de magnétisation est requis, ce qui permet de minimiser les pertes de puissance pendant les commutations.

Les enroulements N1, N2 du transformateur possèdent généralement un nombre de spires sensiblement égal, ce qui permet d'obtenir un fonctionnement symétrique du dispositif convertisseur. Il est également possible d'utiliser un transformateur comportant un rapport de transformation inférieure ou supérieur à ½ qui permet de simplifier la commande du dispositif dans les cas de conversions DC/AC avec un facteur de puissance unitaire.

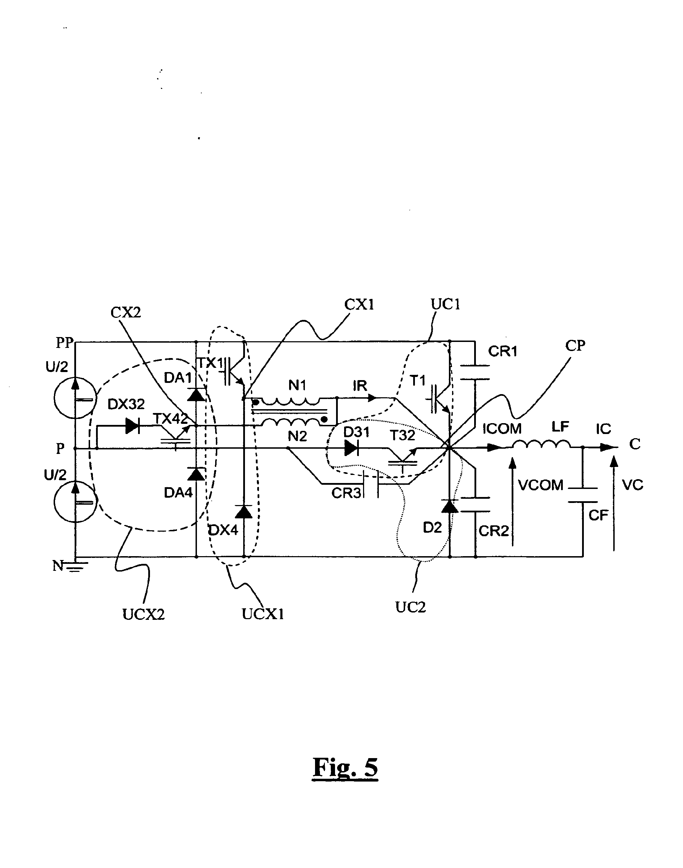

Dans le mode de réalisation représenté à la figure 5, le dispositif convertisseur permet de convertir trois niveaux de tension continus U, UREF, U/2 disponibles sur une première, une seconde et une troisième ligne de tension d'un premier type PP, REF, P en une tension continue VC sur une ligne de tension d'un second type C. Ce type de convertisseur est généralement qualifié de convertisseur DC/DC de type abaisseur, ou en anglais « buck converter ».

Dans le dispositif convertisseur représenté à la figure 5, le premier interrupteur principal est un transistor T1 connecté à la première ligne de tension du premier type PP et orienté pour transférer la puissance de ladite ligne vers le point de commutation principal CP, le second interrupteur principal étant une diode D2 connectée à la seconde ligne de tension du premier type REF et orientée pour transférer la puissance de ladite ligne vers le point de commutation principal CP. Le troisième interrupteur principal comporte, quant à lui, un transistor T32 orienté pour transférer la puissance de la troisième ligne de tension du premier type P vers le point de commutation principal CP et une diode D31 montée en série avec ledit transistor et orientée de la même façon.

En ce qui concerne la première unité de commutation auxiliaire UCX1 du dispositif convertisseur représenté à la figure 5, le premier interrupteur auxiliaire est un transistor TX1 orienté pour transférer la puissance de la première ligne de tension du premier type PP vers le premier point de commutation auxiliaire CX1, le second interrupteur auxiliaire étant une diode DX4 orientée pour transférer la puissance de la seconde ligne de tension du premier type REF vers ledit premier point de commutation auxiliaire CX1.

En ce qui concerne la seconde unité de commutation auxiliaire UCX2 du dispositif convertisseur représenté à la figure 5, le premier interrupteur auxiliaire est une diode DA1 orientée pour transférer la puissance du second point de commutation auxiliaire CX2 vers la première ligne de tension du premier type PP, le second interrupteur auxiliaire étant une diode DA4 orientée pour transférer la puissance de la seconde ligne de tension du premier type REF vers ledit second point de commutation auxiliaire CX2. Le troisième interrupteur auxiliaire de ladite seconde unité de commutation auxiliaire UCX2 comporte, quant à lui, un transistor TX42 orienté pour transférer la puissance de la troisième ligne de tension du premier type P vers le second point de commutation auxiliaire CX2 et une diode DX32 montée en série avec ledit transistor et orientée de la même façon.

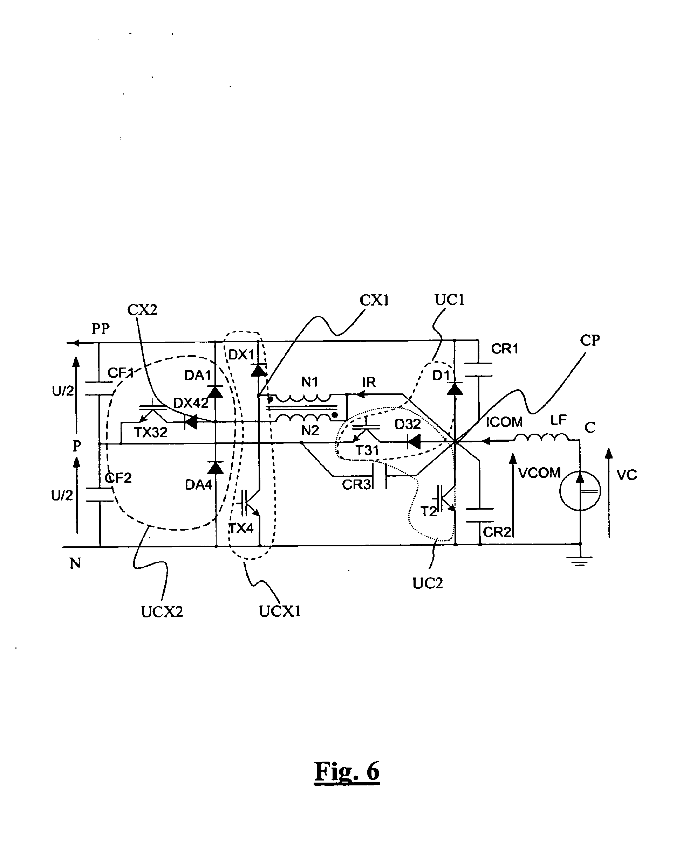

Dans le mode de réalisation représenté à la figure 6, le dispositif convertisseur permet de convertir une tension continue VC disponible sur une ligne de tension d'un second type C en trois niveaux de tension continus U, UREF, U/2 disponibles sur une première, une seconde et une troisième ligne de tension d'un premier type PP, REF, P. Ce type de convertisseur est généralement qualifié de convertisseur DC/DC de type élévateur, ou en anglais « boost converter ».

Dans le dispositif convertisseur représenté à la figure 6, le premier interrupteur principal est une diode D1 connectée à la première ligne de tension du premier type PP et orientée pour transférer la puissance du point de commutation principal CP vers ladite ligne, le second interrupteur principal étant un transistor T2 connecté à la seconde ligne de tension du premier type REF et orienté pour transférer la puissance dudit point de commutation principal CP vers ladite ligne. Le troisième interrupteur principal comporte, quant à lui, un transistor T31 orienté pour transférer la puissance du point de commutation principal CP vers la troisième ligne de tension du premier type P et une diode D32 montée en série avec ledit transistor et orientée de la même façon.

En ce qui concerne la première unité de commutation auxiliaire UCX1 du dispositif convertisseur représenté à la figure 6, le premier interrupteur auxiliaire est une diode DX1 orientée pour transférer la puissance du premier point de commutation auxiliaire CX1 vers la première ligne de tension du premier type PP, le second interrupteur auxiliaire étant un transistor TX4 orienté pour transférer la puissance dudit premier point de commutation auxiliaire CX1 vers la seconde ligne de tension du premier type REF.

En ce qui concerne la seconde unité de commutation auxiliaire UCX2 du dispositif convertisseur représenté à la figure 6, le premier interrupteur auxiliaire est une diode DA1 orientée pour transférer la puissance du second point de commutation auxiliaire CX2 vers la première ligne de tension du premier type PP, le second interrupteur auxiliaire étant une diode DA4 orientée pour transférer la puissance de la seconde ligne de tension du premier type REF vers ledit second point de commutation auxiliaire CX2. Le troisième interrupteur auxiliaire de la seconde unité de commutation auxiliaire UCX2 comporte, quant à lui, un transistor TX32 orienté pour transférer la puissance du second point de commutation auxiliaire CX2 vers la troisième ligne de tension du premier type P et une diode DX42 montée en série avec ledit transistor et orientée de la même façon.

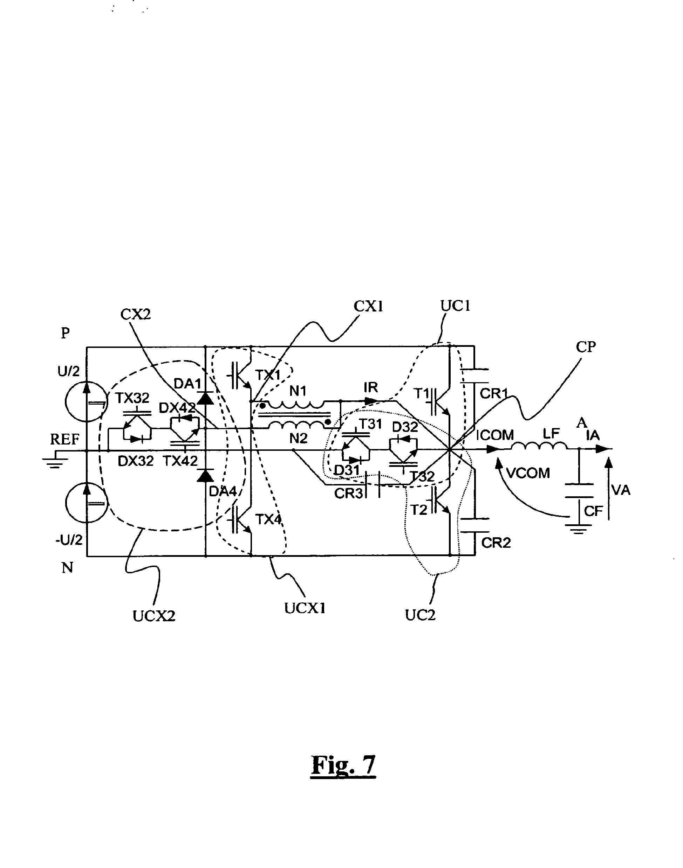

Dans le mode de réalisation représenté à la figure 7, le dispositif convertisseur permet de convertir trois niveaux de tension continus U/2, -U/2, UREF disponibles sur une première, une seconde et une troisième ligne de tension d'un premier type P, N, REF en une tension alternative VA sur une ligne de tension d'un second type A. Ce convertisseur est un onduleur DC/AC avec un facteur de puissance unitaire.

Dans le dispositif convertisseur représenté à la figure 7, le premier interrupteur principal est un transistor T1 connecté à la première ligne de tension du premier type P et orienté pour transférer la puissance de ladite ligne vers le point de commutation principal CP, le second interrupteur principal étant un transistor T2 connecté à la seconde ligne de tension du premier type N et orienté pour transférer la puissance dudit point de commutation principal CP vers ladite ligne. Le troisième interrupteur principal comporte, quant à lui, deux transistors T31, T32 orientés dans des sens opposés et deux diodes D31, D32 montées en parallèle sur respectivement lesdits transistors, chacune des dites diodes étant orientée pour conduire lorsque le transistor en parallèle duquel elle est montée est polarisé en inverse.

En ce qui concerne la première unité de commutation auxiliaire UCX1 du dispositif convertisseur représenté à la figure 7, le premier interrupteur auxiliaire est un transistor TX1 orienté pour transférer la puissance de la première ligne de tension du premier type P vers le premier point de commutation auxiliaire CX1, le second interrupteur auxiliaire étant un transistor TX4 orienté pour transférer la puissance dudit premier point de commutation auxiliaire CX1 vers la seconde ligne de tension du premier type N.

En ce qui concerne la seconde unité de commutation auxiliaire UCX2 du dispositif convertisseur représenté à la figure 7, le premier interrupteur auxiliaire est une diode DA1 orientée pour transférer la puissance du second point de commutation auxiliaire CX2 vers la première ligne de tension du premier type P, le second interrupteur auxiliaire de ladite seconde unité de commutation auxiliaire étant une diode DA4 orientée pour transférer la puissance de la seconde ligne de tension du premier type N vers ledit second point de commutation auxiliaire CX2. Le troisième interrupteur auxiliaire de ladite seconde unité de commutation auxiliaire UCX2 comporte, quant à lui, deux transistors TX32, TX42 orientés dans des sens opposés et deux diodes DX32, DX42 montées en parallèle sur respectivement lesdits transistors, chacune des dites diodes étant orientée pour conduire lorsque le transistor en parallèle duquel elle est montée est polarisé en inverse.

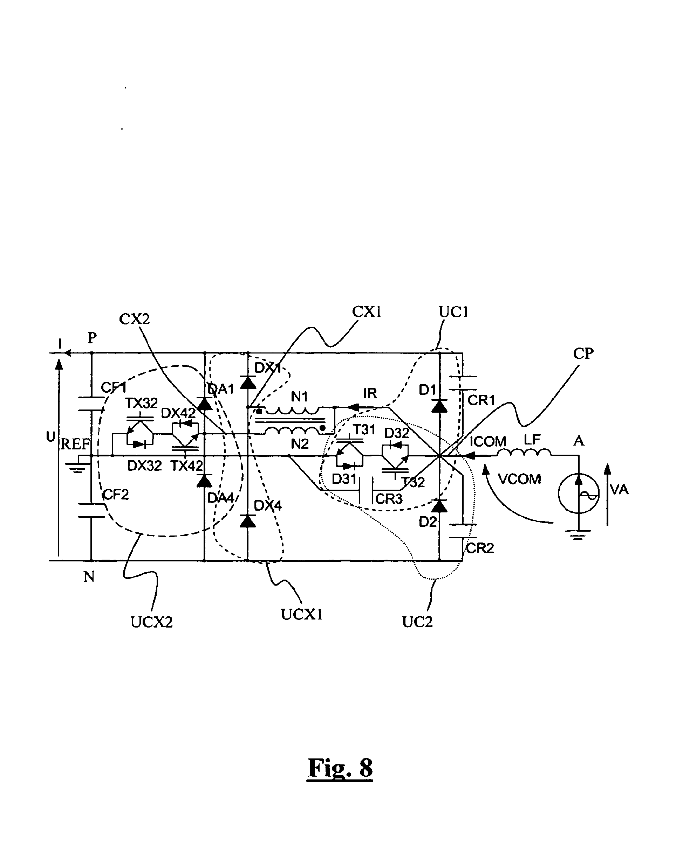

Dans le mode de réalisation représenté à la figure 8, le dispositif convertisseur permet de convertir une tension alternative VA disponible sur une ligne de tension d'un second type A en trois niveaux de tension continus U/2, -U/2, UREF sur une première, une seconde et une troisième ligne de tension d'un premier type P, N, REF. Ce convertisseur est un redresseur AC/DC avec correction du facteur de puissance.

Dans le dispositif convertisseur représenté à la figure 8, le premier interrupteur principal est une diode D1 connectée à la première ligne de tension du premier type P et orientée pour transférer la puissance du point de commutation principal CP vers ladite ligne, le second interrupteur principal étant une diode D2 connectée à la seconde ligne de tension du premier type N et orientée pour transférer la puissance de ladite ligne vers ledit point de commutation principal CP. Le troisième interrupteur principal comporte, quant à lui, deux transistors T31, T32 orientés dans des sens opposés et deux diodes D31, D32 montées en parallèle sur respectivement lesdits transistors, chacune des dites diodes étant orientée pour conduire lorsque le transistor en parallèle duquel elle est montée est polarisé en inverse.

En ce qui concerne la première unité de commutation auxiliaire UCX1 du dispositif convertisseur représenté à la figure 8, le premier interrupteur auxiliaire est une diode DX1 orientée pour transférer la puissance du premier point de commutation auxiliaire CX1 vers la première ligne de tension du premier type P, le second interrupteur auxiliaire étant une diode DX4 orientée pour transférer la puissance de la seconde ligne de tension du premier type N vers ledit premier point de commutation auxiliaire CX1.

En ce qui concerne la seconde unité de commutation auxiliaire UCX2 du dispositif convertisseur représenté à la figure 8, le premier interrupteur auxiliaire est une diode DA1 orientée pour transférer la puissance du second point de commutation auxiliaire CX2 vers la première ligne de tension du premier type P, le second interrupteur auxiliaire étant une diode DA4 orientée pour transférer la puissance de la seconde ligne de tension du premier type N vers ledit second point de commutation auxiliaire CX2. Le troisième interrupteur auxiliaire de la seconde unité de commutation auxiliaire UCX2 comporte, quant à lui, deux transistors TX32, TX42 orientés dans des sens opposés et deux diodes DX32, DX42 montées en parallèle sur respectivement lesdits transistors, chacune des dites diodes étant orientée pour conduire lorsque le transistor en parallèle duquel elle est montée est polarisé en inverse.

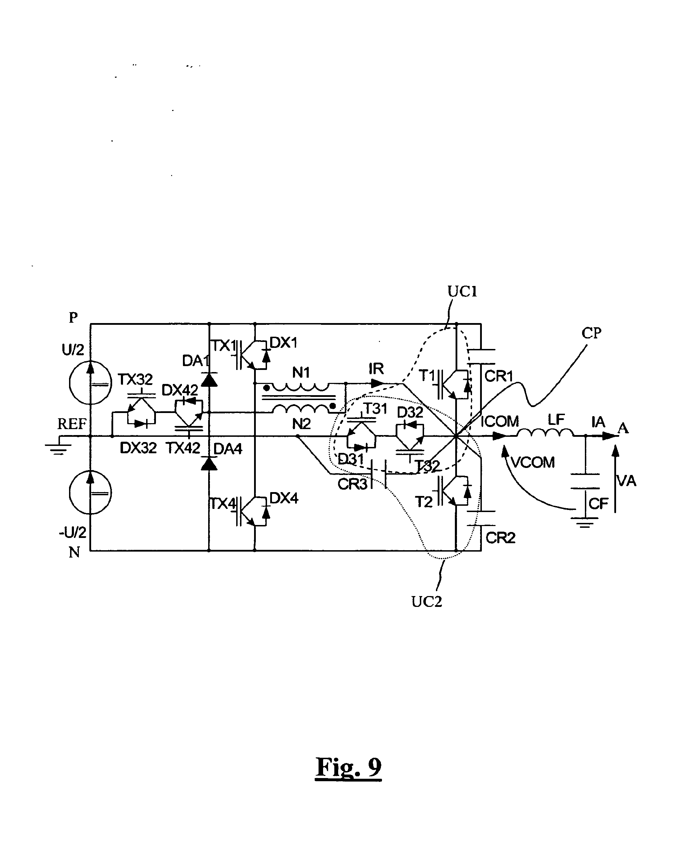

Dans le mode de réalisation représenté à la figure 9, le dispositif convertisseur permet de convertir trois niveaux de tension continus U/2, -U/2, UREF disponibles sur une première, une seconde et une troisième ligne de tension d'un premier type P, N, REF en une tension alternative VA sur une ligne de tension d'un second type A, et ceci dans un sens ou dans l'autre. Ce convertisseur DC/AC est réversible et permet de fonction en mode onduleur ou en mode redresseur.

Dans le dispositif convertisseur représenté à la figure 9, le premier interrupteur principal comporte un transistor T1 orienté pour transférer la puissance de la première ligne de tension du premier type P vers le point de commutation principal CP et une diode D1 montée en parallèle sur ledit transistor et orientée pour conduire lorsque ledit transistor est polarisé en inverse. Le second interrupteur principal comporte un transistor T2 orienté pour transférer la puissance du point de commutation principal CP vers la seconde ligne de tension du premier type N et une diode D2 montée en parallèle sur ledit transistor et orientée pour conduire lorsque ledit transistor est polarisé en inverse. Le troisième interrupteur principal comporte, quant à lui, deux transistors T31, T32 orientés dans des sens opposés et deux diodes D31, D32 montées en parallèle sur respectivement lesdits transistors, chacune des dites diodes étant orientée pour conduire lorsque le transistor en parallèle duquel elle est montée est polarisé en inverse.

En ce qui concerne la première unité de commutation auxiliaire UCX1 du dispositif convertisseur représenté à la figure 9, le premier interrupteur auxiliaire comporte un transistor TX1 orienté pour transférer la puissance de la première ligne de tension du premier type P vers le premier point de commutation auxiliaire CX1 et une diode DX1 montée en parallèle sur ledit transistor et orientée pour conduire lorsque ledit transistor est polarisé en inverse. Le second interrupteur auxiliaire de ladite première unité de commutation auxiliaire UCX1 comporte un transistor TX4 orienté pour transférer la puissance dudit premier point de commutation principal CX1 vers la seconde ligne de tension du premier type N et une diode DX4 montée en parallèle sur ledit transistor et orientée pour conduire lorsque ledit transistor est polarisé en inverse.

En ce qui concerne la seconde unité de commutation auxiliaire UCX2 du dispositif convertisseur représenté à la figure 9, le premier interrupteur auxiliaire est une diode DA1 orientée pour transférer la puissance du second point de commutation auxiliaire CX2 vers la première ligne de tension du premier type P, le second interrupteur auxiliaire étant une diode DA4 orientée pour transférer la puissance de la seconde ligne de tension du premier type N vers ledit second point de commutation auxiliaire CX2. Le troisième interrupteur auxiliaire de ladite seconde unité de commutation auxiliaire UCX2 comporte, quant à lui, deux transistors TX32, TX42 orientés dans des sens opposés et deux diodes DX32, DX42 montées en parallèle sur respectivement lesdits transistors, chacune des dites diodes étant orientée pour conduire lorsque le transistor en parallèle duquel elle est montée est polarisé en inverse.

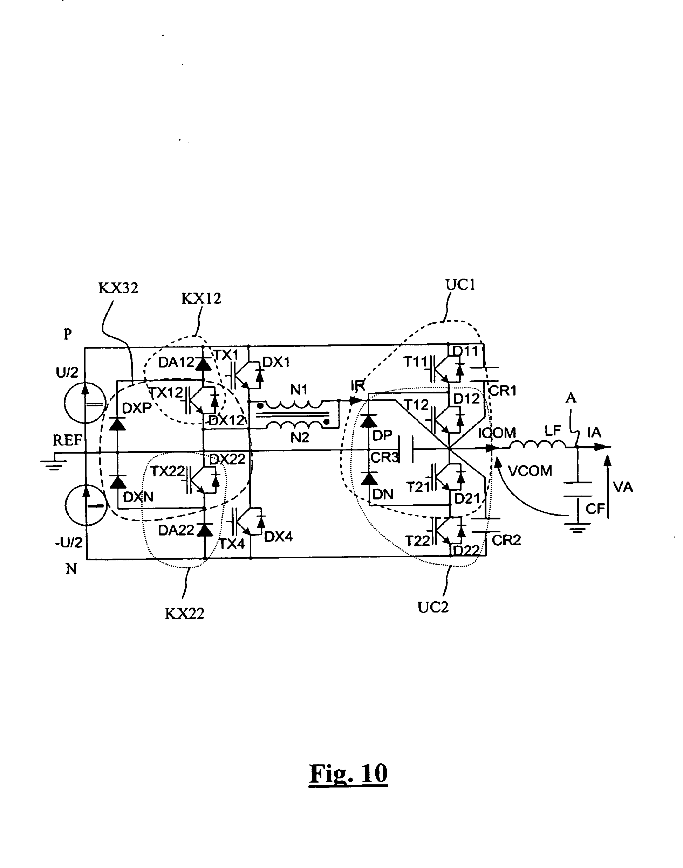

En référence à la figure 10, le dispositif convertisseur comprends les éléments représentés sur la figure 2 sous les mêmes références numériques.

Le dispositif convertisseur représenté à la figure 10 comprend, en outre, une première unité de commutation auxiliaire UCX1 à deux niveaux connectée entre la première ligne de tension du premier type P, la seconde ligne de tension du premier type N, et un premier point de commutation auxiliaire CX1. Cette première unité de commutation auxiliaire UCX1 comporte un premier interrupteur auxiliaire connecté entre la première ligne de tension du premier type P et le premier point de commutation auxiliaire CX1. Ce premier interrupteur auxiliaire comporte un transistor TX1 orienté pour transférer la puissance de la première ligne de tension du premier type P vers le premier point de commutation auxiliaire CX1 et une diode DX1 montée en parallèle sur ledit transistor et orientée pour conduire lorsque ledit transistor est polarisé en inverse. La première unité de commutation auxiliaire UCX1 comporte, en outre, un second interrupteur auxiliaire connecté entre la seconde ligne de tension du premier type N et le premier point de commutation auxiliaire CX1. Ce second interrupteur auxiliaire de la première unité de commutation auxiliaire comporte un transistor TX4 orienté pour transférer la puissance du premier point de commutation auxiliaire CX1 vers la seconde ligne de tension du premier type N et une diode DX4 montée en parallèle sur ledit transistor et orientée pour conduire lorsque ledit transistor est polarisé en inverse.

Le dispositif convertisseur représenté à la figure 10 comprend, en outre, une seconde unité de commutation auxiliaire UCX2 à trois niveaux connectée entre la première ligne de tension du premier type P, la seconde ligne de tension du premier type N, la troisième ligne de tension du premier type REF et un second point de commutation auxiliaire CX2.

Cette seconde unité de commutation auxiliaire UCX2 du dispositif convertisseur représenté à la figure 10 comporte un premier interrupteur auxiliaire (KX12) connecté entre la première ligne de tension du premier type P et le second point de commutation auxiliaire CX2. Ce premier interrupteur auxiliaire KX12 comporte une première diode DA12 connectée à la première ligne de tension du premier type P et orientée pour transférer la puissance du second point de commutation auxiliaire CX2 vers ladite ligne, un premier transistor TX12 monté en série avec ladite première diode et orienté dans un sens opposé, et une seconde diode DX12 montée en parallèle sur ledit premier transistor et orientée pour conduire lorsque ledit premier transistor est polarisé en inverse.

La seconde unité de commutation auxiliaire UCX2 du dispositif convertisseur représenté à la figure 10 comporte un second interrupteur auxiliaire KX22 connecté entre la seconde ligne de tension du premier type N et le second point de commutation auxiliaire CX2. Ce second interrupteur auxiliaire KX22 comporte une première diode DA22 connectée à la seconde ligne de tension du premier type et orientée pour transférer la puissance de ladite ligne vers ledit second point de commutation auxiliaire CX2, un premier transistor TX22 monté en série avec ladite première diode et orienté dans un sens opposé, et une seconde diode DX22 montée en parallèle sur ledit premier transistor et orientée pour conduire lorsque ledit premier transistor est polarisé en inverse.

La seconde unité de commutation auxiliaire UCX2 du dispositif convertisseur représenté à la figure 10 comporte un troisième interrupteur auxiliaire KX32 connecté entre la troisième ligne de tension du premier type REF et le second point de commutation auxiliaire CX2. Ce troisième interrupteur KX32 comporte les premiers transistors TX12, TX22 mentionnés précédemment, les secondes diodes DX12, DX22 mentionnées précédemment, et des diodes DXP, DXN connectées entre la troisième ligne de tension du premier type REF et des lignes de connexion entre lesdites premières et lesdites secondes diodes.

Le dispositif convertisseur représenté à la figure 10 comprend, en outre, un transformateur équipé de deux enroulements N1, N2. Deux extrémités libres de ces enroulements N1, N2 sont raccordées à respectivement le premier point et le second point de commutation auxiliaire CX1, CX2. Les deux autres extrémités de ces enroulements N1, N2 sont, quant à elles, connectées en un point commun, qui est lui-même raccordé au point de commutation principal CP.

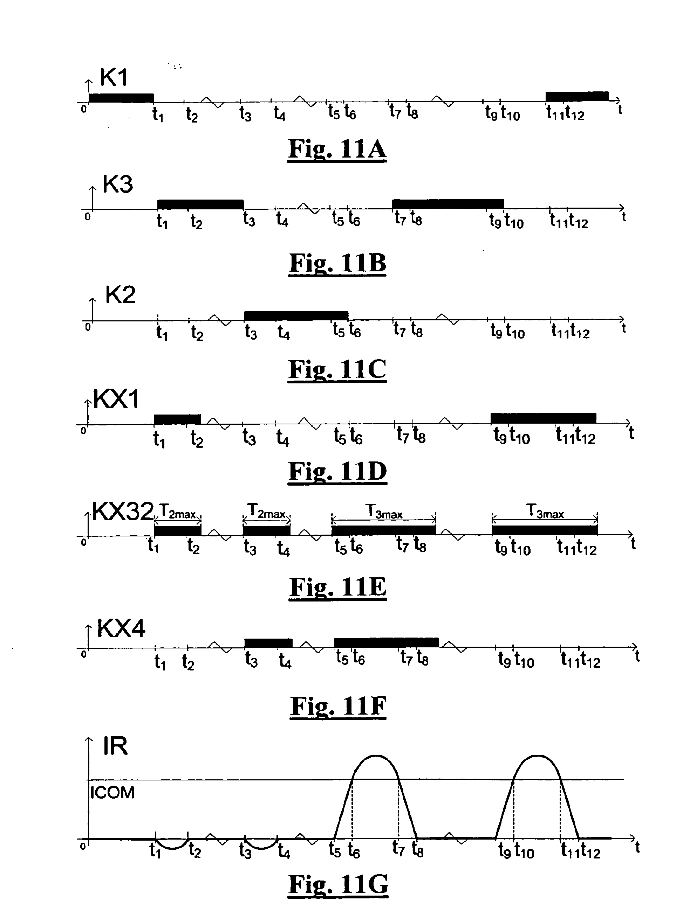

Le fonctionnement du dispositif convertisseur représenté à la figure 4 est décrit dans ce qui suit en référence aux figures 11A à 11Q. Notons que le fonctionnement détaillé des modes de réalisation représentés sur les figures 5 à 10 peut facilement être dérivé de la description ci-après se rapportant au mode de réalisation représenté à la figure 4.

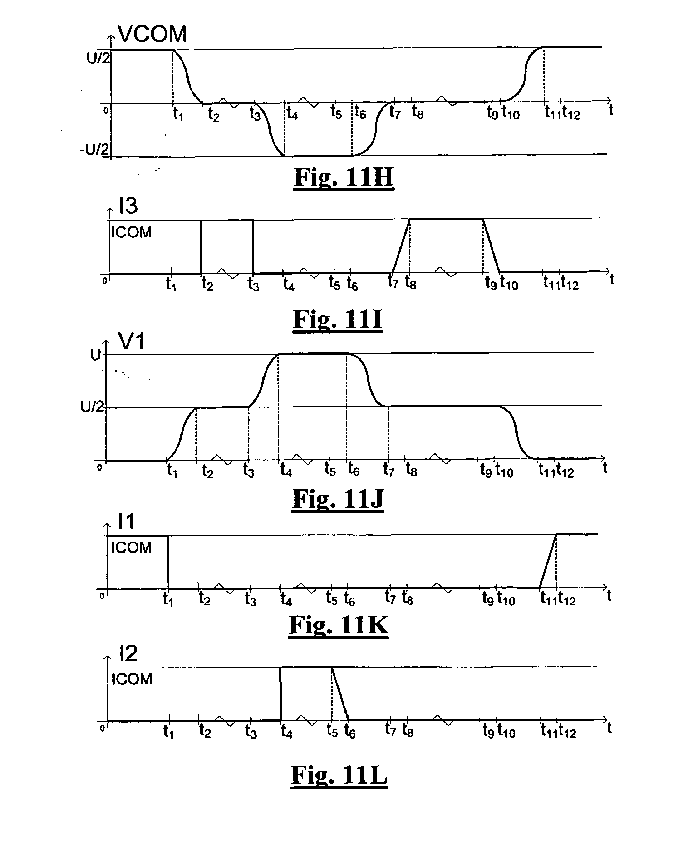

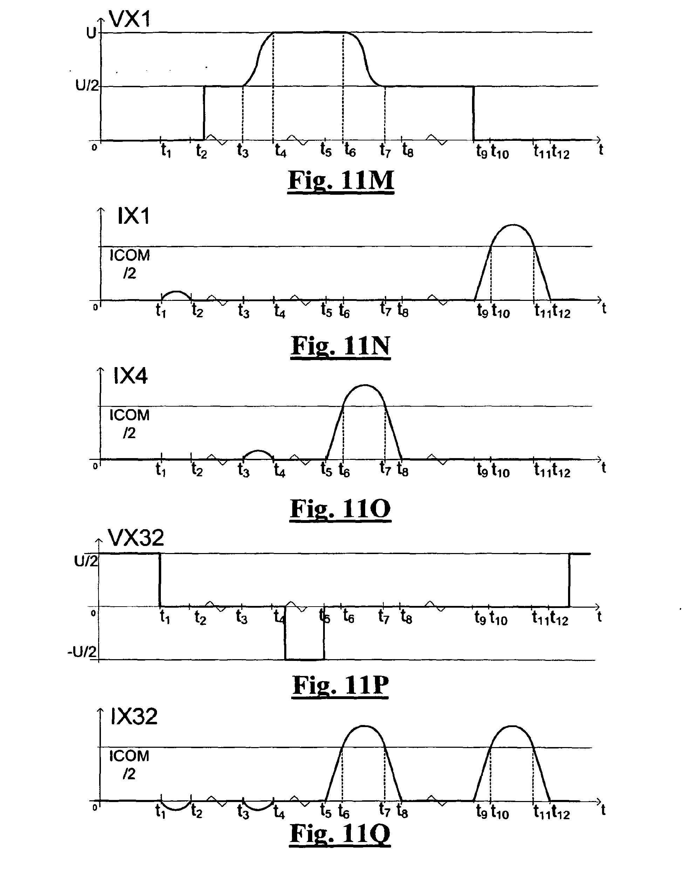

Avant un temps t1, seul le premier interrupteur principal K1 est fermé (figure 11) et la tension VCOM sur le point de commutation principal CP est égale à la tension sur la première ligne de tension du premier type P, c'est-à-dire U/2 (figure 11 H).

A un temps t1, le premier interrupteur principal K1 est ouvert, alors que le troisième interrupteur principal K3 est fermé (figures 11A et 11B). En même temps, le premier interrupteur auxiliaire KX1 de la première unité de commutation auxiliaire UCX1 et le troisième interrupteur auxiliaire KX32 de la seconde unité de commutation auxiliaire UCX2 sont fermés (figures 11D et 11E), et un courant IR négatif circule dans le transformateur N1, N2 (figure 11G). Le troisième et le second condensateur CR3, CR2 se déchargent dans le transformateur N1, N2, alors que le premier condensateur CR1 se charge (figure 11J). Il se produit ainsi un phénomène de résonnance entre l'inductance LR, le premier, le second et le troisième condensateur CR1, CR2, CR3, jusqu'à ce que la tension VCOM sur le point de commutation principal CP devienne égale à la tension sur la troisième ligne de tension du premier type REF, c'est-à-dire la tension de référence UREF (figure 11H). Ce phénomène de résonnance s'accompagne d'une variation lente de la tension VCOM sur le point de commutation principal CP, ce qui permet de d'ouvrir le premier interrupteur principal K1 sous un niveau de tension contrôlé (figure 11J).

A un temps t2, la tension VCOM sur le point de commutation principal CP est égale à la tension sur la troisième ligne de tension du premier type REF, c'est-à-dire la tension de référence UREF (figure 11H) et le courant I3 circulant à travers le troisième interrupteur principal K3 est essentiellement égal au courant de charge (figure 11I). Après une durée T2MAX comptée à partir de la fermeture du premier interrupteur auxiliaire KX1 de la première unité de commutation auxiliaire UCX1 et du troisième interrupteur auxiliaire KX32 de la seconde unité de commutation auxiliaire UCX2, ces deux interrupteurs sont de nouveau ouverts. La durée T2MAX a été choisie de façon à ce qu'à l'expiration de cette durée, la tension VCOM sur le point de commutation principal CP soit égale à la tension sur la troisième ligne de tension du premier type REF, c'est-à-dire la tension de référence UREF. Ainsi, la fermeture du premier interrupteur auxiliaire KX1 de la première unité de commutation auxiliaire UCX1 et du troisième interrupteur auxiliaire KX32 de la seconde unité de commutation auxiliaire UCX2 est réalisée sous des courants respectivement référencés IX1 et IX32 qui sont nuls (figures 11N et 11Q), ce qui permet de limiter les pertes de puissance.

A un temps t3, le troisième interrupteur principal K3 est ouvert, alors que le second interrupteur principal K2 est fermé (figures 11B et 11C). En même temps, le troisième interrupteur auxiliaire KX32 de la seconde unité de commutation auxiliaire UCX2 et le second interrupteur auxiliaire KX4 de la première unité de commutation auxiliaire UCX1 sont fermés (figures 11E et 11F), et un courant IR négatif circule dans le transformateur N1, N2 (figure 11G). Le second condensateur CR2 se décharge dans le transformateur N1, N2, alors que le premier et troisième condensateur CR1, CR3 se chargent (figure 11J). Il se produit encore une fois un phénomène de résonnance entre l'inductance LR, le premier, le second et le troisième condensateur CR1, CR2, CR3, jusqu'à ce que la tension VCOM sur le point de commutation principal CP devienne égale à la tension sur la seconde ligne de tension du premier type N, c'est-à-dire -U/2 (figure 11 H). Ce phénomène de résonnance s'accompagne d'une variation lente de la tension VCOM sur le point de commutation principal CP, ce qui permet de d'ouvrir le troisième interrupteur principal K3 sous un niveau de tension contrôlé.

A un temps t4, la tension VCOM sur le point de commutation principal CP est égale à la tension sur la seconde ligne de tension du premier type N, c'est-à-dire -U/2 (figure 11 H) et le courant 12 circulant à travers le second interrupteur principal K2 est essentiellement égal au courant de charge (figure 11L). Après une durée T2MAX comptée à partir de la fermeture du troisième interrupteur auxiliaire KX32 de la seconde unité de commutation auxiliaire UCX2 et du second interrupteur auxiliaire KX4 de la première unité de commutation auxiliaire UCX1, ces deux interrupteurs sont de nouveau ouverts. La durée T2MAX a été choisie de façon à ce qu'à l'expiration de cette durée, la tension VCOM sur le point de commutation principal CP soit égale à la tension sur la seconde ligne de tension du premier type N, c'est-à-dire -U/2. Ainsi, l'ouverture du troisième interrupteur auxiliaire KX32 de la seconde unité de commutation auxiliaire UCX2 et du second interrupteur auxiliaire KX4 de la première unité de commutation auxiliaire UCX1 est réalisée sous des courants respectivement référencés IX32 et IX4 qui sont nuls (figures 11Q et 11O). L'ouverture de ces interrupteurs ce fait donc sous un courant nul, ce qui permet de limiter les pertes de puissance.

A un temps t5, avant la fermeture du troisième interrupteur principal K3, le troisième interrupteur auxiliaire KX32 de la seconde unité de commutation auxiliaire UCX2 et le second interrupteur auxiliaire KX4 de la première unité de commutation auxiliaire UCX1 sont fermés (figures 11E et 11F), et un courant IR positif commence à circuler dans le transformateur N1, N2 (figure 11G) en augmentant progressivement (figure 11G) pendant que la valeur du courant I2 circulant dans le second interrupteur principal K2 décroit progressivement (figure 11L).

A un temps t6, le courant IR circulant dans le transformateur N1, N2 atteint une valeur correspondant au courant circulant dans la charge ICOM (figure 11G) et la valeur du courant 12 circulant dans le second interrupteur principal K2 s'annule (figure 11L). En même temps, le second interrupteur principal K2 est ouvert alors que le courant 12 est nul, ce qui permet de limiter les pertes de puissance. Le troisième et le premier condensateur CR3, CR1 se déchargent dans le transformateur N1, N2 (figure 11J), alors que le second condensateur CR2 se charge. Il se produit ainsi un phénomène de résonnance entre l'inductance LR, le premier, le second et le troisième condensateur CR1, CR2, CR3, jusqu'à ce que la tension VCOM sur le point de commutation principal CP devienne égale à la tension sur la troisième ligne de tension du premier type REF, c'est-à-dire la tension de référence UREF (figure 11H).

A un temps t7, la tension VCOM sur le point de commutation principal CP est égale à la tension de référence UREF (figure 11H). En même temps, le troisième interrupteur principal K3 est fermé (figures 11 B) sous une tension nulle (figure 11 H), ce qui permet de limiter les pertes de puissance. Dès que le troisième interrupteur principal K3 est fermé, le phénomène de résonnance entre l'inductance LR, le premier, le second et le troisième condensateur CR1, CR2, CR3 est stoppé et le courant IR circulant dans le transformateur N1, N2 décroit jusqu'à s'annuler (figure 11G), alors que le courant I3 circulant dans le troisième interrupteur principal K3 augmente (figure 11I).

A un temps t8, la tension VCOM sur le point de commutation principal CP est égale à la tension sur la troisième ligne de tension du premier type REF, c'est-à-dire la tension de référence UREF (figure 11H) et le courant I3 circulant à travers le troisième interrupteur principal K3 est essentiellement égal au courant de charge (figure 11I). Après une durée T3MAX comptée à partir de la fermeture du troisième interrupteur auxiliaire KX32 de la seconde unité de commutation auxiliaire UCX2 et du second interrupteur auxiliaire KX4 de la première unité de commutation auxiliaire UCX1, ces deux interrupteurs sont de nouveau ouverts. La durée T3MAX a été choisie de façon à ce qu'à l'expiration de cette durée, le courant IR circulant dans le transformateur N1, N2 s'annule. Ainsi, la fermeture du troisième interrupteur auxiliaire KX32 de la seconde unité de commutation auxiliaire UCX2 et du second interrupteur auxiliaire KX4 de la première unité de commutation auxiliaire UCX1 est réalisée sous des courants respectivement référencés IX32 et IX4 qui sont nuls ( figures 11Q et 11O), ce qui permet de limiter les pertes de puissance.

A un temps t9, avant la fermeture du premier interrupteur principal K1, le premier interrupteur auxiliaire KX1 de la première unité de commutation auxiliaire UCX1 et le troisième interrupteur auxiliaire KX32 de la second unité de commutation auxiliaire UCX2 sont fermés (figures 11D et 11E), et un courant IR positif commence à circuler dans le transformateur N1, N2 en augmentant progressivement (figure 11G) pendant que la valeur du courant I3 circulant dans le troisième interrupteur principal K3 décroit progressivement (figure 11I).

A un temps t10, le courant IR circulant dans le transformateur N1, N2 atteint une valeur correspondant au courant circulant dans la charge ICOM (figure 11G) et le courant I3 circulant dans le troisième interrupteur principal K3 s'annule (figure 11I). En même temps, le troisième interrupteur principal K3 est ouvert alors que le courant I3 est nul, ce qui permet de limiter les pertes de puissance. Le second et le troisième condensateur CR2, CR3 se chargent dans le transformateur N1, N2 (figure 11J), alors que le premier condensateur CR1 se décharge. Il se produit ainsi un phénomène de résonnance entre l'inductance LR, le premier, le second et le troisième condensateur CR1, CR2, CR3, jusqu'à ce que la tension VCOM sur le point de commutation principal CP devienne égale à la tension sur la première ligne de tension du premier type P, c'est-à-dire U/2 (figure 11H).

A un temps t11, la tension VCOM sur le point de commutation principal CP est égale à la tension U/2 sur la première ligne de tension du premier type (figure 11H) et la tension V1 aux bornes du premier interrupteur principal K1 atteint une valeur nulle (figure 11J). En même temps, le premier interrupteur principal K1 est fermé (figures 11A) sous une tension nulle (figure 11I), ce qui permet de limiter les pertes de puissance. Dès que le premier interrupteur principal K1 est fermé, le phénomène de résonnance entre l'inductance LR, le premier, le second et le troisième condensateur CR1, CR2, CR3 est stoppé et le courant IR circulant dans le transformateur N1, N2 décroit jusqu'à s'annuler (figure 11G), alors que le courant I1 circulant dans le premier interrupteur principal K1 augmente (figure 11K).

A un temps t12, la tension VCOM sur le point de commutation principal CP est égale à la tension sur la première ligne de tension du premier type P, c'est-à-dire U/2 (figure 11H) et le courant de charge est essentiellement égal au courant I1 circulant à travers le premier interrupteur principal K1 (figure 11K). Après une durée T3MAX comptée à partir de la fermeture du premier interrupteur auxiliaire KX1 de la première unité de commutation auxiliaire UCX1 et du troisième interrupteur auxiliaire KX32 de la seconde unité de commutation auxiliaire UCX2, ces deux interrupteurs sont de nouveau ouverts. La durée T3MAX a été choisie de façon à ce qu'à l'expiration de cette durée, le courant IR circulant dans le transformateur N1, N2 s'annule. Ainsi, la fermeture du premier interrupteur auxiliaire KX1 de la première unité de commutation auxiliaire UCX1 et du troisième interrupteur auxiliaire KX32 de la seconde unité de commutation auxiliaire UCX2 est réalisée sous des courants respectivement référencés IX1 et IX32 qui sont nuls (figures 11N et 11Q), ce qui permet de limiter les pertes de puissance.

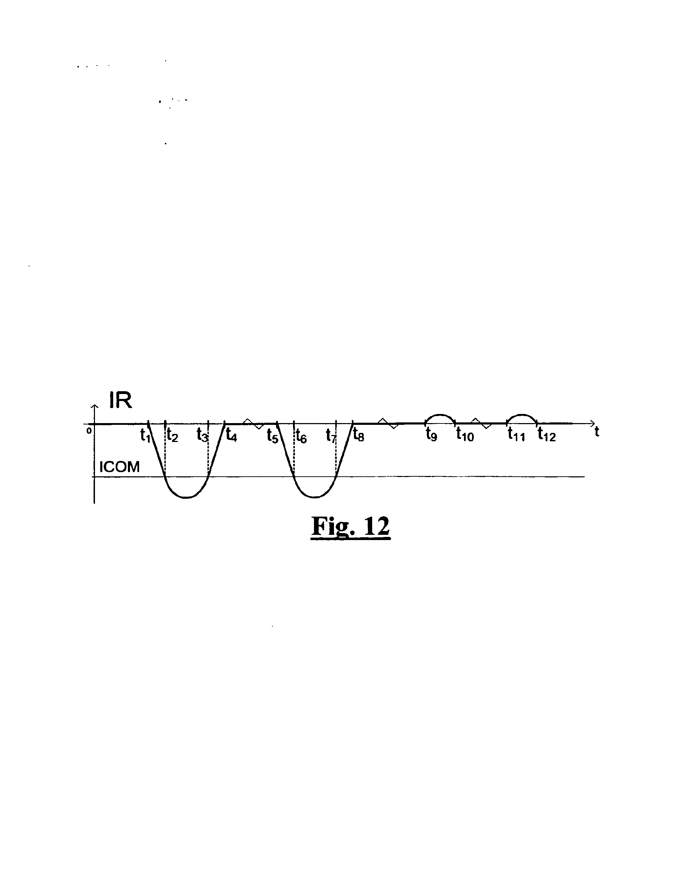

Dans le cas où le courant de charge ICOM est négatif, les variations du courant IR circulant dans le transformateur N1, N2 sont représentées sur la figure 12, et la description du fonctionnement ci-dessus s'applique de la même façon.

Le convertisseur selon l'invention permet donc de limiter les pertes de puissance lors des commutations des interrupteurs principaux K1, K2, K3, quelque soit le facteur de puissance de la charge.

Les dispositifs convertisseurs décrits précédemment peuvent être utilisés dans une alimentation sans interruption 101 telle que celle représentée à la figure 12. Cette alimentation sans interruption comprend une entrée d'alimentation 102 sur laquelle est appliquée une tension d'entrée variable d'un premier réseau triphasé. L'alimentation sans interruption comprend un redresseur 103, ledit redresseur étant connecté entre, d'un côté, l'entrée d'alimentation 102 et, de l'autre côté, deux lignes de sortie 104 ou bus de tension sensiblement continue. L'alimentation sans interruption comprend un onduleur 106 correspondant à l'un des dispositifs convertisseurs décrit précédemment, ledit onduleur étant connecté entre les lignes de sortie 104 et une sortie 107 destiné à fournir une tension alternative triphasée sécurisée à une charge 108. Le bus de tension continue 104 est également connecté à une batterie 109 par l'entremise d'un convertisseur DC/DC 110.

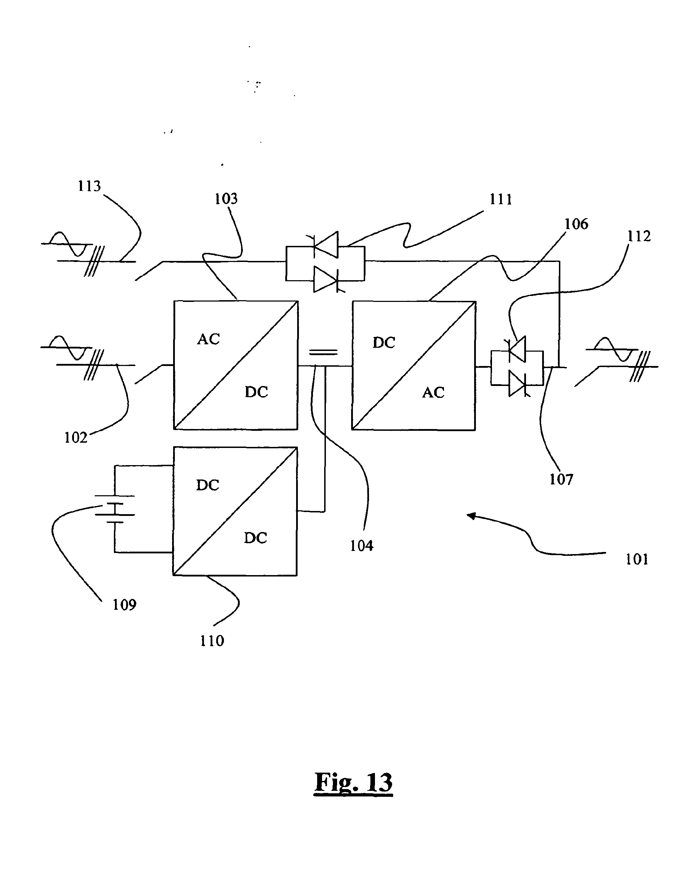

Comme cela est visible sur la figure 13, des contacteurs statiques 111 et 112 permettent de sélectionner entre l'entrée d'alimentation 102 du premier réseau triphasé et une entrée d'alimentation 113 d'un second réseau également triphasé. Ainsi, il est possible d'alimenter la charge par l'intermédiaire du premier réseau sécurisé par l'alimentation sans interruption 101, et le cas échéant commuter sur le second réseau.

## Revendications

1. Dispositif convertisseur permettant de transformer des niveaux de tension électrique (U/2, -U/2, UREF; U, UREF, U/2) disponibles sur une première, une seconde et une troisième ligne de tension d'un premier type (P, N, REF; PP, REF, P), en une tension (VA ; VC) sur une ligne de tension d'un second type (A ; C), dans un sens ou dans l'autre, ledit dispositif comprenant :
- une première unité de commutation principale (UC1) connectée à ladite première ligne de tension du premier type (P ; PP) et équipée d'un premier interrupteur principal (K1 ; T1 ; T11, D11, T12, D12 ; T1, D1 ; D1),
- une seconde unité de commutation principale (UC2) connectée à ladite seconde ligne de tension du premier type (N ; REF) et équipée d'un second interrupteur principal (K2 ; T2 ; T22, D22, T21, D21 ; T2, D2 ; D2),
- un point de commutation principal (CP) raccordé à ladite ligne de tension du second type (A ; C) et connectée à ladite première et à ladite seconde unité de commutation principale, et
- un troisième interrupteur principal (K3 ; T3 ; DP, T12, D12, DN, T21, D21 ; T31, D31, T32, D32; T31, D32; T32, D31) commun à ladite première et à ladite seconde unité de commutation principale, ledit troisième interrupteur principal étant connecté entre ledit point de commutation principal (CP) et la troisième ligne de tension du premier type (REF ; P),
**caractérisé en ce qu'**il comprend :
- un premier, un second et un troisième condensateur (CR1, CR2, CR3) connectés entre ledit point de commutation principal (CP) et respectivement ladite première, ladite seconde et ladite troisième ligne de tension du premier type,
- une première unité de commutation auxiliaire (UCX1) connectée entre la première ligne de tension du premier type, la seconde ligne de tension du premier type, et un premier point de commutation auxiliaire (CX1),
- une seconde unité de commutation auxiliaire (UCX2) connectée entre la première ligne de tension du premier type, la seconde ligne de tension du premier type, la troisième ligne de tension du premier type et un second point de commutation auxiliaire (CX2), et
- un transformateur équipé d'enroulements (N1, N2) pourvus de deux extrémités libres et de deux extrémités connectées en un point commun, ledit point commun étant raccordé au dit point de commutation principal (CP), les deux extrémités libres étant raccordées à respectivement ledit premier point (CX1) et ledit second point de commutation auxiliaire (CX2).

2. Dispositif selon la revendication 1, **caractérisé en ce que** la première unité de commutation auxiliaire (UCX1) comporte :
- un premier interrupteur auxiliaire de ladite première unité de commutation auxiliaire (KX1 ; TX1 ; DX1 ; TX1, DX1) connecté entre la première ligne de tension du premier type (P ; PP) et le premier point de commutation auxiliaire (CX1), et
- un second interrupteur auxiliaire de ladite première unité de commutation auxiliaire (KX4 ; TX4 ; DX4 ; TX4, DX4) connecté entre la seconde ligne de tension du premier type (N ; REF) et ledit premier point de commutation auxiliaire (CX1).

3. Dispositif selon la revendication 2, **caractérisé en ce que** la seconde unité de commutation auxiliaire (UCX2) comporte :
- un premier interrupteur auxiliaire de ladite seconde unité de commutation auxiliaire (KX12 ; DA1 ; DA12, TX12, DX12) connecté entre la première ligne de tension du premier type (P ; PP) et le second point de commutation auxiliaire (CX2),
- un second interrupteur auxiliaire de ladite seconde unité de commutation auxiliaire (KX22 ; DA4 ; DA22, TX22, DX22) connecté entre la seconde ligne de tension du premier type (N ; REF) et ledit second point de commutation auxiliaire (CX2), et
- un troisième interrupteur auxiliaire de ladite seconde unité de commutation auxiliaire (KX32 ; TX12, TX22, DX12, DX22, DXP, DXN ; TX32, DX32, TX42, DX42 ; TX32, DX42 ; TX42, DX32) connecté entre la troisième ligne de tension du premier type (REF ; P) et ledit second point de commutation auxiliaire (CX2).

4. Dispositif selon la revendication 3, **caractérisé en ce que** :
- le premier interrupteur auxiliaire de la seconde unité de commutation auxiliaire étant une diode (DA1) orientée pour transférer la puissance du second point de commutation auxiliaire (CX2) vers la première ligne de tension du premier type, et
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2).

5. Dispositif selon la revendication 3, **caractérisé en ce que** :
- le premier interrupteur principal est un transistor (T1) connecté à la première ligne de tension du premier type et orienté pour transférer la puissance de ladite ligne vers le point de commutation principal (CP),
- le second interrupteur principal étant une diode (D2) connectée à la seconde ligne de tension du premier type et orientée pour transférer la puissance de ladite ligne vers le point de commutation principal (CP),
- le troisième interrupteur principal comportant un transistor (T32) orienté pour transférer la puissance de la troisième ligne de tension du premier type vers ledit point de commutation principal (CP) et une diode (D31) montée en série avec ledit transistor et orientée de la même façon,
- le premier interrupteur auxiliaire de la première unité de commutation auxiliaire étant un transistor (TX1) orienté pour transférer la puissance de la première ligne de tension du premier type vers le premier point de commutation auxiliaire (CX1),
- le second interrupteur auxiliaire de ladite première unité de commutation auxiliaire étant une diode (DX4) orientée pour transférer la puissance de la seconde ligne de tension du premier type vers ledit premier point de commutation auxiliaire (CX1),
- le premier interrupteur auxiliaire de la seconde unité de commutation auxiliaire étant une diode (DA1) orientée pour transférer la puissance du second point de commutation auxiliaire (CX2) vers la première ligne de tension du premier type,
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2),
- le troisième interrupteur auxiliaire de ladite seconde unité de commutation auxiliaire comportant un transistor (TX42) orienté pour transférer la puissance de la troisième ligne de tension du premier type vers ledit second point de commutation auxiliaire (CX2) et une diode (DX32) montée en série avec ledit transistor et orientée de la même façon.

6. Dispositif selon la revendication 3, **caractérisé en ce que** :
- le premier interrupteur principal est une diode (D1) connectée à la première ligne de tension du premier type et orientée pour transférer la puissance du point de commutation principal (CP) vers ladite ligne,
- le second interrupteur principal étant un transistor (T2) connecté à la seconde ligne de tension du premier type et orienté pour transférer la puissance dudit point de commutation principal (CP) vers ladite ligne,
- le troisième interrupteur principal comportant un transistor (T31) orienté pour transférer la puissance dudit point de commutation principal (CP) vers la troisième ligne de tension du premier type et une diode (D32) montée en série avec ledit transistor et orientée de la même façon,
- le premier interrupteur auxiliaire de la première unité de commutation auxiliaire étant une diode (DX1) orientée pour transférer la puissance du premier point de commutation auxiliaire (CX1) vers la première ligne de tension du premier type,
- le second interrupteur auxiliaire de ladite première unité de commutation auxiliaire étant un transistor (TX4) orienté pour transférer la puissance dudit premier point de commutation auxiliaire (CX1) vers la seconde ligne de tension du premier type,
- le premier interrupteur auxiliaire de la seconde unité de commutation auxiliaire étant une diode (DA1) orientée pour transférer la puissance du second point de commutation auxiliaire (CX2) vers la première ligne de tension du premier type,
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2),
- le troisième interrupteur auxiliaire de ladite seconde unité de commutation auxiliaire comportant un transistor (TX32) orienté pour transférer la puissance dudit second point de commutation auxiliaire (CX2) vers la troisième ligne de tension du premier type et une diode (DX42) montée en série avec ledit transistor et orientée de la même façon.

7. Dispositif selon la revendication 3, **caractérisé en ce que** :
- le premier interrupteur principal est un transistor (T1) connecté à la première ligne de tension du premier type et orienté pour transférer la puissance de ladite ligne vers le point de commutation principal (CP),
- le second interrupteur principal étant un transistor (T2) connecté à la seconde ligne de tension du premier type et orienté pour transférer la puissance dudit point de commutation principal (CP) vers ladite ligne,
- le troisième interrupteur principal comportant deux transistors (T31, T32) orientés dans des sens opposés et deux diodes (D31, D32) montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire étant un transistor (TX1) orienté pour transférer la puissance de la première ligne de tension du premier type vers le premier point de commutation auxiliaire (CX1),
- le second interrupteur auxiliaire de ladite première unité de commutation auxiliaire étant un transistor (TX4) orienté pour transférer la puissance dudit premier point de commutation auxiliaire (CX1) vers la seconde ligne de tension du premier type,
- le premier interrupteur auxiliaire de la seconde unité de commutation auxiliaire étant une diode (DA1) orientée pour transférer la puissance du second point de commutation auxiliaire (CX2) vers la première ligne de tension du premier type,
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2),
- le troisième interrupteur auxiliaire de ladite seconde unité de commutation auxiliaire comportant deux transistors (TX32, TX42) orientés dans des sens opposés et deux diodes (DX32, DX42) montées en parallèle sur respectivement lesdits transistors, chacune des dites diodes étant orientée pour conduire lorsque le transistor en parallèle duquel elle est montée est polarisé en inverse.

8. Dispositif selon la revendication 3, **caractérisé en ce que** :
- le premier interrupteur principal est une diode (D1) connectée à la première ligne de tension du premier type et orientée pour transférer la puissance du point de commutation principal (CP) vers ladite ligne,
- le second interrupteur principal étant une diode (D2) connectée à la seconde ligne de tension du premier type et orientée pour transférer la puissance de ladite ligne vers ledit point de commutation principal (CP),
- le troisième interrupteur principal comportant deux transistors (T31, T32) orientés dans des sens opposés et deux diodes (D31, D32) montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire étant une diode (DX1) orientée pour transférer la puissance du premier point de commutation auxiliaire (CX1) vers la première ligne de tension du premier type,
- le second interrupteur auxiliaire de ladite première unité de commutation auxiliaire étant une diode (DX4) orientée pour transférer la puissance de la seconde ligne de tension du premier type vers ledit premier point de commutation auxiliaire (CX1),
- le premier interrupteur auxiliaire de la seconde unité de commutation auxiliaire étant une diode (DA1) orientée pour transférer la puissance du second point de commutation auxiliaire (CX2) vers la première ligne de tension du premier type,
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2),
- le troisième interrupteur auxiliaire de ladite seconde unité de commutation auxiliaire comportant deux transistors (TX32, TX42) orientés dans des sens opposés et deux diodes (DX32, DX42) montées en parallèle sur respectivement lesdits transistors, chacune des dites diodes étant orientée pour conduire lorsque le transistor en parallèle duquel elle est montée est polarisé en inverse.

9. Dispositif selon la revendication 3, **caractérisé en ce que** :
- le premier interrupteur principal comporte un transistor (T1) orienté pour transférer la puissance de la première ligne de tension du premier type vers le point de commutation principal (CP) et une diode (D1) montée en parallèle sur ledit transistor et orientée pour conduire lorsque ledit transistor est polarisé en inverse,
- le second interrupteur principal comportant un transistor (T2) orienté pour transférer la puissance du point de commutation principal (CP) vers la seconde ligne de tension du premier type et une diode (D2) montée en parallèle sur ledit transistor et orientée pour conduire lorsque ledit transistor est polarisé en inverse,
- le troisième interrupteur principal comportant deux transistors (T31, T32) orientés dans des sens opposés et deux diodes (D31, D32) montées en parallèle sur respectivement lesdits transistors, chacune des dites diodes étant orientée pour conduire lorsque le transistor en parallèle duquel elle est montée est polarisé en inverse,
- le premier interrupteur auxiliaire de la première unité de commutation auxiliaire comportant un transistor (TX1) orienté pour transférer la puissance de la première ligne de tension du premier type vers le premier point de commutation auxiliaire (CX1) et une diode (DX1) montée en parallèle sur ledit transistor et orientée pour conduire lorsque ledit transistor est polarisé en inverse,
- le second interrupteur auxiliaire de ladite première unité de commutation auxiliaire comportant un transistor (TX4) orienté pour transférer la puissance dudit premier point de commutation principal (CX1) vers la seconde ligne de tension du premier type et une diode (DX4) montée en parallèle sur ledit transistor et orientée pour conduire lorsque ledit transistor est polarisé en inverse,
- le premier interrupteur auxiliaire de la seconde unité de commutation auxiliaire étant une diode (DA1) orientée pour transférer la puissance du second point de commutation auxiliaire (CX2) vers la première ligne de tension du premier type,
- le second interrupteur auxiliaire de ladite seconde unité de commutation auxiliaire étant une diode (DA4) orientée pour transférer la puissance de la seconde ligne de tension du premier type vers ledit second point de commutation auxiliaire (CX2),
- le troisième interrupteur auxiliaire de ladite seconde unité de commutation auxiliaire comportant deux transistors (TX32, TX42) orientés dans des sens opposés et deux diodes (DX32, DX42) montées en parallèle sur respectivement lesdits transistors, chacune des dites diodes étant orientée pour conduire lorsque le transistor en parallèle duquel elle est montée est polarisé en inverse.

10. Dispositif selon l'une quelconque des revendications 1 à 3, **caractérisé en ce que** :
- le premier interrupteur principal (K1) comporte un premier transistor (T11) connecté à la première ligne de tension du premier type (P) et orienté pour transférer la puissance de ladite ligne vers le point de commutation principal (CP), un second transistor (T12) monté en série avec ledit premier transistor et orienté dans le même sens, une première et une seconde diode (D11, D12) montées en parallèle sur respectivement ledit premier et ledit second transistor, chacune des dites diodes étant orientée pour conduire lorsque le transistor en parallèle duquel elle est montée est polarisé en inverse,
- le second interrupteur principal (K2) comportant un premier transistor (T22) connecté à la seconde ligne de tension du premier type (N) et orienté pour transférer la puissance dudit point de commutation principal (CP) vers ladite ligne, un second transistor (T21) monté en série avec ledit premier transistor et orienté dans le même sens, une première et une seconde diode (D22, D21) montées en parallèle sur respectivement ledit premier et ledit second transistor, chacune des dites diodes étant orientée pour conduire lorsque le transistor en parallèle duquel elle est montée est polarisé en inverse,
- le troisième interrupteur principal (K3) comporte lesdits seconds transistors (T12, T21), lesdites secondes diodes (D12, D21) et des diodes (DP, DN) connectées entre la troisième ligne de tension du premier type (REF) et des lignes de connexion entre lesdits premiers et lesdits seconds transistors (T11, T22, T12, T21).

11. Dispositif selon la revendication 10, **caractérisé en ce que**
- le premier interrupteur auxiliaire de la première unité de commutation auxiliaire comporte un transistor (TX1) orienté pour transférer la puissance de la première ligne de tension du premier type vers le premier point de commutation auxiliaire (CX1) et une diode (DX1) montée en parallèle sur ledit transistor et orientée pour conduire lorsque ledit transistor est polarisé en inverse,
- le second interrupteur auxiliaire de ladite première unité de commutation auxiliaire comportant un transistor (TX4) orienté pour transférer la puissance dudit premier point de commutation auxiliaire (CX1) vers la seconde ligne de tension du premier type et une diode (DX4) montée en parallèle sur ledit transistor et orientée pour conduire lorsque ledit transistor est polarisé en inverse.

12. Dispositif selon l'une quelconque des revendications 10 ou 11, **caractérisé en ce que** :
- le premier interrupteur auxiliaire (KX12) de ladite seconde unité de commutation auxiliaire (UCX2) comporte une première diode (DA12) connectée à la première ligne de tension du premier type (P) orientée pour transférer la puissance du second point de commutation auxiliaire (CX2) vers ladite ligne, un premier transistor (TX12) monté en série avec ladite première diode et orienté dans un sens opposé, et une seconde diode (DX12) montée en parallèle sur ledit premier transistor et orientée pour conduire lorsque ledit premier transistor est polarisé en inverse,
- le second interrupteur auxiliaire (KX22) de ladite seconde unité de commutation auxiliaire (UCX2) comportant une première diode (DA22) connectée à la seconde ligne de tension du premier type (N) orientée pour transférer la puissance de ladite ligne vers ledit second point de commutation auxiliaire (CX2), un premier transistor (TX22) monté en série avec ladite première diode et orienté dans un sens opposé, et une seconde diode (DX22) montée en parallèle sur ledit premier transistor et orientée pour conduire lorsque ledit premier transistor est polarisé en inverse,
- le troisième interrupteur (KX32) de ladite seconde unité de commutation auxiliaire (UCX2) comportant lesdits premiers transistors (TX12, TX22), lesdites secondes diodes (DX12, DX22) et des diodes (DXP, DXN) connectées entre la troisième ligne de tension du premier type (REF) et des lignes de connexion entre lesdites premières et lesdites secondes diodes (DA12, DA22, DX12, DX22).

13. Dispositif selon l'une quelconque des revendications 1 à 12, **caractérisé en ce que** les enroulements (N1, N2) du transformateur possèdent un nombre de spires sensiblement égal.

14. Alimentation sans interruption (101) comprenant une entrée d'alimentation (102) sur laquelle est appliquée une tension d'entrée alternative, un redresseur (103) connecté à ladite entrée, deux lignes de tension sensiblement continue de signes opposés connectées en sortie dudit redresseur, un onduleur (106) connecté aux dites lignes de tension de tension sensiblement continue et comportant une sortie (107) destinée à fournir une tension sécurisée, **caractérisée en ce que** ledit onduleur est un dispositif convertisseur selon l'une des revendications précédentes et fournit à partir des tensions sensiblement continues une tension sécurisée alternative.

## Patentansprüche

1. Umrichterschaltung zur Umwandlung verschiedener elektrischer Spannungen (U/2,
- U/2, UREF; U, UREF, U/2), die an einer ersten, einer zweiten und einer dritten Spannungsleitung eines ersten Typs (P, N, REF; PP, REF, P) anstehen, in eine Spannung (VA; VC), die an einer Spannungsleitung eines zweiten Typs (A; C) ansteht, welche Schaltung im Umkehrbetrieb arbeiten kann und
- eine erste Hauptschaltgruppe (UC1), die an die genannte erste Spannungsleitung des ersten Typs (P; PP) angeschossen ist und einen ersten Hauptschalter (K1; T1; T11, D11, T12, D12 ; T1, D1; D1) umfasst,
- eine zweite Hauptschaltgruppe (UC2), die an die genannte zweite Spannungsleitung des ersten Typs (N ; REF) angeschossen ist und einen zweiten Hauptschalter (K2; T2; T22, D22, T21, D21; T2, D2; D2) umfasst,
- einen Hauptschaltpunkt (CP), der an die genannte Spannungsleitung des zweiten Typs (A; C) angeschlossen und mit der genannten ersten und der genannten zweiten Hauptschaltgruppe verbunden ist, sowie
- einen dritten Hauptschalter (K3; T3; DP, T12, D12, DN, T21, D21; T31, D31, T32, D32; T31, D32; T32, D31) umfasst, welcher der genannten ersten und der genannten zweiten Hauptschaltgruppe gemeinsam zugeordnet ist, wobei der genannte dritte Hauptschalter zwischen den genannten Hauptschaltpunkt (CP) und die dritte Spannungsleitung des ersten Typs (REF; P) geschaltet ist,
**dadurch gekennzeichnet, dass** die Schaltung folgende Komponenten umfasst:
- einen ersten, einen zweiten und einen dritten Kondensator (CR1, CR2, CR3), die zwischen den genannten Hauptschaltpunkt (CP) und jeweils die erste, zweite bzw. dritte Spannungsleitung des ersten Typs geschaltet sind,
- eine erste Hilfsschaltgruppe (UCX1), die zwischen die erste Spannungsleitung des ersten Typs, die zweite Spannungsleitung des ersten Typs und einen ersten Hilfsschaltpunkt (CX1) geschaltet ist,
- eine zweite Hilfsschaltgruppe (UCX2), die zwischen die erste Spannungsleitung des ersten Typs, die zweite Spannungsleitung des ersten Typs, die dritte Spannungsleitung des ersten Typs und einen zweiten Hilfsschaltpunkt (CX2) geschaltet ist, sowie
- einen Transformator mit zwei Wicklungen (N1, N2), die zwei freie Enden sowie zwei an einen gemeinsamen Schaltungspunkt angeschlossene Enden umfassen, wobei der genannte gemeinsame Schaltungspunkt an den genannten Hauptschaltpunkt und die zwei freien Enden an den genannten ersten Hilfsschaltpunkt bzw. den genannten zweiten Hilfsschaltpunkt angeschlossen sind.

2. Schaltung nach Anspruch 1, **dadurch gekennzeichnet, dass** die erste Hilfsschaltgruppe (UCX1)
- einen ersten Hilfsschalter der genannten ersten Hilfsschaltgruppe (KX1; TX1; DX1; TX1, DX1), der zwischen die erste Spannungsleitung des ersten Typs (P; PP) und den ersten Hilfsschaltpunkt (CX1) geschaltet ist, sowie
- einen zweiten Hilfsschalter der genannten ersten Hilfsschaltgruppe (KX4; TX4; DX4; TX4, DX4) umfasst, der zwischen die zweite Spannungsleitung des ersten Typs (N; REF) und den ersten Hilfsschaltpunkt (CX1) geschaltet ist.

3. Schaltung nach Anspruch 2, **dadurch gekennzeichnet, dass** die zweite Hilfsschaltgruppe (UCX2)
- einen ersten Hilfsschalter der genannten zweiten Hilfsschaltgruppe (KX12; DA1; DA12, TX12, DX12), der zwischen die erste Spannungsleitung des ersten Typs (P; PP) und den zweiten Hilfsschaltpunkt (CX2) geschaltet ist,
- einen zweiten Hilfsschalter der genannten zweiten Hilfsschaltgruppe (KX22; DA4; DA22, TX22, DX22), der zwischen die zweite Spannungsleitung des ersten Typs (N; REF) und den genannten zweiten Hilfsschaltpunkt (CX2) geschaltet ist, sowie
- einen dritten Hilfsschalter der genannten zweiten Hilfsschaltgruppe (KX32; TX12, TX22, DX12, DX22, DXP, DXN; TX32, DX32, TX42, DX42; TX32, DX42; TX42, DX32) umfasst, der zwischen die dritte Spannungsleitung des ersten Typs (REF; P) und den genannten zweiten Hilfsschaltpunkt (CX2) geschaltet ist.

4. Schaltung nach Anspruch 3, **dadurch gekennzeichnet, dass**
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt, und dass
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt.

5. Schaltung nach Anspruch 3, **dadurch gekennzeichnet, dass**
- der erste Hauptschalter durch einen Transistor (T1) gebildet wird, der an die erste Spannungsleitung des ersten Typs angeschlossen und so geschaltet ist, dass er die Leistung von der genannten Leitung an den Hauptschaltpunkt (CP) überträgt,
- der zweite Hauptschalter durch eine Diode (D2 gebildet wird, die an die zweite Spannungsleitung des ersten Typs angeschlossen und so geschaltet ist, dass sie die Leistung von der genannten Leitung an den Hauptschaltpunkt (CP) überträgt,
- der dritte Hauptschalter einen Transistor (T32), der so geschaltet ist, dass er die Leistung von der dritten Spannungsleitung des ersten Typs an den genannten Hauptschaltpunkt (CP) überträgt, sowie eine Diode (D31) umfasst, die mit gleicher Wirkrichtung in Reihe zum genannten Transistor geschaltet ist,
- der erste Hilfsschalter der ersten Hilfsschaltgruppe durch einen Transistor (TX1) gebildet wird, der so geschaltet ist, dass er die Leistung von der ersten Spannungsleitung des ersten Typs an den ersten Hilfsschaltpunkt (CX1) überträgt.
- der zweite Hilfsschalter der genannten ersten Hilfsschaltgruppe durch eine Diode (DX4) gebildet wird, die so geschaltet ist, dass sie die Leistung von der zweiten Spannungsleitung des ersten Typs an den genannten ersten Hilfsschaltpunkt (CX1) überträgt.
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt,
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt, und dass
- der dritte Hilfsschalter der genannten zweiten Hilfsschaltgruppe einen Transistor (TX42), der so geschaltet ist, dass er die Leistung von der dritten Spannungsleitung des ersten Typs an den genannten zweiten Hilfsschaltpunkt (CX2) überträgt, sowie eine Diode (DX32) umfasst, die mit gleicher Wirkrichtung in Reihe zum genannten Transistor geschaltet ist.

6. Schaltung nach Anspruch 3, **dadurch gekennzeichnet, dass**
- der erste Hauptschalter durch eine Diode (D1) gebildet wird, die an die erste Spannungsleitung des ersten Typs angeschlossen und so geschaltet ist, dass sie die Leistung vom Hauptschaltpunkt (CP) in die genannte Leitung überträgt,
- der zweite Hauptschalter durch einen Transistor (T2) gebildet wird, der an die zweite Spannungsleitung des ersten Typs angeschlossen und so geschaltet ist, dass er die Leistung vom genannten Hauptschaltpunkt (CP) in die genannte Leitung überträgt,
- der dritte Hauptschalter einen Transistor (T31), der so geschaltet ist, dass er die Leistung vom genannten Hauptschaltpunkt (CP) in die dritte Spannungsleitung des ersten Typs überträgt, sowie eine Diode (D32) umfasst, die mit gleicher Wirkrichtung in Reihe zum genannten Transistor geschaltet ist,
- der erste Hilfsschalter der ersten Hilfsschaltgruppe durch eine Diode (DX1) gebildet wird, die so geschaltet ist, dass sie die Leistung vom ersten Hilfsschaltpunkt (CX1) in die erste Spannungsleitung des ersten Typs überträgt,
- der zweite Hilfsschalter der genannten ersten Hilfsschaltgruppe durch einen Transistor (TX4) gebildet wird, der so geschaltet ist, dass er die Leistung vom genannten ersten Hilfsschaltpunkt (CX1) in die zweite Spannungsleitung des ersten Typs überträgt,
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt,
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt, und dass
- der dritte Hilfsschalter der genannten zweiten Hilfsschaltgruppe einen Transistor (TX32), der so geschaltet ist, dass er die Leistung vom genannten zweiten Hilfsschaltpunkt (CX2) in die dritte Spannungsleitung des ersten Typs überträgt, sowie eine Diode (DX42) umfasst, die mit gleicher Wirkrichtung in Reihe zum genannten Transistor geschaltet ist.

7. Schaltung nach Anspruch 3, **dadurch gekennzeichnet, dass**
- der erste Hauptschalter durch einen Transistor (T1) gebildet wird, der an die erste Spannungsleitung des ersten Typs angeschlossen und so geschaltet ist, dass er die Leistung von der genannten Leitung an den Hauptschaltpunkt (CP) überträgt,
- der zweite Hauptschalter durch einen Transistor (T2) gebildet wird, der an die zweite Spannungsleitung des ersten Typs angeschlossen und so geschaltet ist, dass er die Leistung vom genannten Hauptschaltpunkt (CP) in die genannte Leitung überträgt,
- der dritte Hauptschalter zwei entgegengerichtet geschaltete Transistoren (T31, T32) sowie zwei jeweils parallel zu den genannten Transistoren geschaltete Dioden (D31, D32) umfasst, wobei jede der genannten Dioden so geschaltet ist, dass sie in Durchlassrichtung betrieben wird, wenn der parallel zu ihr liegende Transistor in Sperrrichtung betrieben wird,
- der erste Hilfsschalter der ersten Hilfsschaltgruppe durch einen Transistor (TX1) gebildet wird, der so geschaltet ist, dass er die Leistung von der ersten Spannungsleitung des ersten Typs an den ersten Hilfsschaltpunkt (CX1) überträgt.
- der zweite Hilfsschalter der genannten ersten Hilfsschaltgruppe durch einen Transistor (TX4) gebildet wird, der so geschaltet ist, dass er die Leistung vom genannten ersten Hilfsschaltpunkt (CX1) in die zweite Spannungsleitung des ersten Typs überträgt,
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt,
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt, und dass
- der dritte Hilfsschalter der genannten zweiten Hilfsschaltgruppe zwei entgegengerichtet geschaltete Transistoren (TX32, TX42) sowie zwei jeweils parallel zu den genannten Transistoren geschaltete Dioden (DX32, DX42) umfasst, wobei jede der genannten Dioden so geschaltet ist, dass sie in Durchlassrichtung betrieben wird, wenn der parallel zu ihr liegende Transistor in Sperrrichtung betrieben wird.

8. Schaltung nach Anspruch 3, **dadurch gekennzeichnet, dass**
- der erste Hauptschalter durch eine Diode (D1) gebildet wird, die an die erste Spannungsleitung des ersten Typs angeschlossen und so geschaltet ist, dass sie die Leistung vom Hauptschaltpunkt (CP) in die genannte Leitung überträgt,
- der zweite Hauptschalter durch eine Diode (D2) gebildet wird, die an die zweite Spannungsleitung des ersten Typs angeschlossen und so geschaltet ist, dass sie die Leistung von der genannten Leitung an den genannten Hauptschaltpunkt (CP) überträgt,
- der dritte Hauptschalter zwei entgegengerichtet geschaltete Transistoren (T31, T32) sowie zwei jeweils parallel zu den genannten Transistoren geschaltete Dioden (D31, D32) umfasst, wobei jede der genannten Dioden so geschaltet ist, dass sie in Durchlassrichtung betrieben wird, wenn der parallel zu ihr liegende Transistor in Sperrrichtung betrieben wird,
- der erste Hilfsschalter der ersten Hilfsschaltgruppe durch eine Diode (DX1) gebildet wird, die so geschaltet ist, dass sie die Leistung vom ersten Hilfsschaltpunkt (CX1) in die erste Spannungsleitung des ersten Typs überträgt,
- der zweite Hilfsschalter der genannten ersten Hilfsschaltgruppe durch eine Diode (DX4) gebildet wird, die so geschaltet ist, dass sie die Leistung von der zweiten Spannungsleitung des ersten Typs an den genannten ersten Hilfsschaltpunkt (CX1) überträgt.
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt,
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt, und dass
- der dritte Hilfsschalter der genannten zweiten Hilfsschaltgruppe zwei entgegengerichtet geschaltete Transistoren (TX32, TX42) sowie zwei jeweils parallel zu den genannten Transistoren geschaltete Dioden (DX32, DX42) umfasst, wobei jede der genannten Dioden so geschaltet ist, dass sie in Durchlassrichtung betrieben wird, wenn der parallel zu ihr liegende Transistor in Sperrrichtung betrieben wird.

9. Schaltung nach Anspruch 3, **dadurch gekennzeichnet, dass**
- der erste Hauptschalter einen Transistor (T1), der so geschaltet ist, dass er die Leistung von der ersten Spannungsleitung des ersten Typs an den Hauptschaltpunkt (CP) überträgt, sowie eine Diode (D1) umfasst, die parallel zum genannten Transistor geschaltet ist und in Durchlassrichtung betrieben wird, wenn der genannte Transistor in Sperrrichtung betrieben wird,
- der zweite Hauptschalter einen Transistor (T2), der so geschaltet ist, dass er die Leistung vom Hauptschaltpunkt (CP) in die zweite Spannungsleitung des ersten Typs überträgt, sowie eine Diode (D2) umfasst, die parallel zum genannten Transistor geschaltet ist und in Durchlassrichtung betrieben wird, wenn der genannte Transistor in Sperrrichtung betrieben wird,
- der dritte Hauptschalter zwei entgegengerichtet geschaltete Transistoren (T31, T32) sowie zwei jeweils parallel zu den genannten Transistoren geschaltete Dioden (D31, D32) umfasst, wobei jede der genannten Dioden so geschaltet ist, dass sie in Durchlassrichtung betrieben wird, wenn der parallel zu ihr liegende Transistor in Sperrrichtung betrieben wird,
- der erste Hilfsschalter der genannten ersten Hilfsschaltgruppe einen Transistor (TX1), der so geschaltet ist, dass er die Leistung von der ersten Spannungsleitung des ersten Typs an den genannten ersten Hilfsschaltpunkt (CX1) überträgt, sowie eine Diode (DX1) umfasst, die parallel zum genannten Transistor geschaltet ist und in Durchlassrichtung betrieben wird, wenn der genannte Transistor in Sperrrichtung betrieben wird,
- der zweite Hilfsschalter der genannten ersten Hilfsschaltgruppe einen Transistor (TX4), der so geschaltet ist, dass er die Leistung vom genannten ersten Hilfsschaltpunkt (CX1) in die zweite Spannungsleitung des ersten Typs überträgt, sowie eine Diode (DX4) umfasst, die parallel zum genannten Transistor geschaltet ist und in Durchlassrichtung betrieben wird, wenn der genannte Transistor in Sperrrichtung betrieben wird,
- der erste Hilfsschalter der zweiten Hilfsschaltgruppe durch eine Diode (DA1) gebildet wird, die so geschaltet ist, dass sie die Leistung vom zweiten Hilfsschaltpunkt (CX2) in die erste Spannungsleitung des ersten Typs überträgt,
- der zweite Hilfsschalter der genannten zweiten Hilfsschaltgruppe durch eine Diode (DA4) gebildet wird, die so geschaltet ist, dass sie die Leistung von der zweiten Spannungsleitung des ersten Typs an den genannten zweiten Hilfsschaltpunkt (CX2) überträgt, und dass
- der dritte Hilfsschalter der genannten zweiten Hilfsschaltgruppe zwei entgegengerichtet geschaltete Transistoren (TX32, TX42) sowie zwei jeweils parallel zu den genannten Transistoren geschaltete Dioden (DX32, DX42) umfasst, wobei jede der genannten Dioden so geschaltet ist, dass sie in Durchlassrichtung betrieben wird, wenn der parallel zu ihr liegende Transistor in Sperrrichtung betrieben wird.

10. Schaltung nach irgendeinem der Ansprüche 1 bis 3, **dadurch gekennzeichnet, dass**
- der erste Hauptschalter (K1) einen ersten Transistor (T11), der an die erste Spannungsleitung des ersten Typs (P) angeschlossen und so geschaltet ist, dass er die Leistung von der genannten Leitung an den Hauptschaltpunkt (CP) überträgt, einen zweiten Transistor (T12), der mit gleicher Wirkrichtung in Reihe zum genannten ersten Transistor geschaltet ist, sowie eine erste und eine zweite Diode (D11, D12) umfasst, welche Dioden jeweils parallel zum ersten bzw. zum zweiten Transistor geschaltet sind, wobei jede der genannten Dioden so geschaltet ist, dass sie in Durchlassrichtung betrieben wird, wenn der parallel zu ihr liegende Transistor in Sperrrichtung betrieben wird,
- der zweite Hauptschalter (K2) einen ersten Transistor (T22), der an die zweite Spannungsleitung des ersten Typs (N) angeschlossen und so geschaltet ist, dass er die Leistung vom genannten Hauptschaltpunkt (CP) in die genannte Leitung überträgt, einen zweiten Transistor (T21), der mit gleicher Wirkrichtung in Reihe zum genannten ersten Transistor geschaltet ist, sowie eine erste und eine zweite Diode (D22, D21) umfasst, welche Dioden jeweils parallel zum ersten bzw. zum zweiten Transistor geschaltet sind, wobei jede der genannten Dioden so geschaltet ist, dass sie in Durchlassrichtung betrieben wird, wenn der parallel zu ihr liegende Transistor in Sperrrichtung betrieben wird,
- der dritte Hauptschalter (K3) die genannten zweiten Transistoren (T12, T21), die genannten zweiten Dioden (D12, D21) sowie die Dioden (DP, DN) umfasst, die zwischen die dritte Spannungsleitung des ersten Typs (REF) und die Verbindungsleitungen zwischen den genannten ersten und den genannten zweiten Transistoren (T11, T22, T12, T21) geschaltet sind.

11. Schaltung nach Anspruch 10, **dadurch gekennzeichnet, dass**
- der erste Hilfsschalter der ersten Hilfsschaltgruppe einen Transistor (TX1), der so geschaltet ist, dass er die Leistung von der ersten Spannungsleitung des ersten Typs an den ersten Hilfsschaltpunkt (CX1) überträgt, sowie eine Diode (DX1) umfasst, die parallel zum genannten Transistor geschaltet ist und in Durchlassrichtung betrieben wird, wenn der genannte Transistor in Sperrrichtung betrieben wird,
- der zweite Hilfsschalter der genannten ersten Hilfsschaltgruppe einen Transistor (TX4), der so geschaltet ist, dass er die Leistung vom genannten ersten Hilfsschaltpunkt (CX1) in die zweite Spannungsleitung des ersten Typs überträgt, sowie eine Diode (DX4) umfasst, die parallel zum genannten Transistor geschaltet ist und in Durchlassrichtung betrieben wird, wenn der genannte Transistor in Sperrrichtung betrieben wird,

12. Schaltung nach irgendeinem der Ansprüche 10 oder 11, **dadurch gekennzeichnet, dass**
- der erste Hilfsschalter (KX12) der genannten zweiten Hilfsschaltgruppe (UCX2) eine erste Diode (DA12), die an die erste Spannungsleitung des ersten Typs (P) angeschlossen und so geschaltet ist, dass sie die Leistung vom zweiten Hilfsschaltpunkt (CX2) in die genannte Leitung überträgt, einen mit umgekehrter Wirkrichtung in Reihe zur genannten ersten Diode geschalteten ersten Transistor (TX12) sowie eine zweite Diode (DX12) umfasst, die parallel zum genannten ersten Transistor geschaltet ist und in Durchlassrichtung betrieben wird, wenn der genannte Transistor in Sperrrichtung betrieben wird,
- der zweite Hilfsschalter (KX22) der genannten zweiten Hilfsschaltgruppe (UCX2) eine erste Diode (DA22), die an die zweite Spannungsleitung des ersten Typs (N) angeschlossen und so geschaltet ist, dass sie die Leistung von der genannten Leitung an den genannten zweiten Hilfsschaltpunkt (CX2) überträgt, einen mit umgekehrter Wirkrichtung in Reihe zur genannten ersten Diode geschalteten ersten Transistor (TX22) sowie eine zweite Diode (DX22) umfasst, die parallel zum genannten ersten Transistor geschaltet ist und in Durchlassrichtung betrieben wird, wenn der genannte Transistor in Sperrrichtung betrieben wird,
- der dritte Schalter (KX32) der genannten zweiten Hilfsschaltgruppe (UCX2) die genannten ersten Transistoren (TX12, TX22), die genannten zweiten Dioden (DX12, DX22) sowie die Dioden (DXP, DXN) umfasst, die zwischen die dritte Spannungsleitung des ersten Typs (REF) und die Verbindungsleitungen zwischen den genannten ersten und den genannten zweiten Dioden (DA12, DA22, DX12, DX22) geschaltet sind.

13. Schaltung nach irgendeinem der Ansprüche 1 bis 12, **dadurch gekennzeichnet, dass** die Wicklungen (N1, N2) des Transformators annähernd die gleiche Windungszahl aufweisen.

14. Unterbrechungsfreie Stromversorgung (101) mit einem Einspeiseeingang (102), an den eine Eingangs-Wechselspannung angelegt wird, einem an den genannten Eingang angeschlossenen Gleichrichter (103), zwei an den Gleicluichterausgang angeschlossenen Leitungen mit Quasi-Gleichspannungen entgegengerichteter Polarität, einem an die genannten Quasi-Gleichspannungsleitungen angeschlossenen Wechselrichter (106) mit einem Ausgang (107), der dazu dient, eine gesicherte Ausgangsspannung zu liefern, **dadurch gekennzeichnet, dass** der genannte Wechsehichter als Umrichterschaltung nach einem der vorhergehenden Ansprüche ausgebildet ist und eine aus den genannten Quasi-Gleichspannungen gewonnene, gesicherte Wechselspannung liefert.

## Claims

1. Converter device for converting electric voltage levels (U/2, -U/2, UREF; U, UREF, U/2) available on a first, a second and a third voltage line of a first type (P, N, REF; PP, REF, P), into a voltage (VA; VC) on a voltage line of a second type (A; C), in either direction, the said device comprising:
- a first main switching unit (UC1) connected to the said first voltage line of the first type (P; PP) and equipped with a first main switch (K1; T1; T11, D11, T12, D12; T1, D1; D1),
- a second main switching unit (UC2) connected to the said second voltage line of the first type (N; REF) and equipped with a second main switch (K2; T2; T22, D22, T21, D21; T2, D2; D2),
- a main switching point (CP) connected to the said voltage line of the second type (A; C) and connected to the said first and to the said second main switching unit, and
- a third main switch (K3; T3; DP, T12, D12, DN, T21, D21; T31, D31, T32, D32; T31, D32; T32, D31) common to the said first and to the said second main switching unit, the said third main switch being connected between the said main switching point (CP) and the third voltage line of the first type (REF; P),
**characterized in that** it comprises:
- a first, a second and a third capacitor (CR1, CR2, CR3) connected between the said main switching point (CP) and, respectively, the said first, the said second and the said third voltage line of the first type,
- a first auxiliary switching unit (UCX1) connected between the first voltage line of the first type, the second voltage line of the first type, and a first auxiliary switching point (CX1),
- a second auxiliary switching unit (UCX2) connected between the first voltage line of the first type, the second voltage line of the first type, the third voltage line of the first type and a second auxiliary switching point (CX2), and
- a transformer equipped with windings (N1, N2) provided with two free ends and with two ends connected to a common point, the said common point being connected to the said main switching point (CP), the two free ends being respectively connected to the said first auxiliary switching point (CX1) and the said second auxiliary switching point (CX2).

2. Device according to Claim 1, **characterized in that** the first auxiliary switching unit (UCX1) includes:
- a first auxiliary switch of the said first auxiliary switching unit (KX1; TX1; DX1; TX1, DX1) connected between the first voltage line of the first type (P; PP) and the first auxiliary switching point (CX1), and
- a second auxiliary switch of the said first auxiliary switching unit (KX4; TX4; DX4; TX4, DX4) connected between the second voltage line of the first type (N; REF) and the said first auxiliary switching point (CX1).

3. Device according to Claim 2, **characterized in that** the second auxiliary switching unit (UCX2) includes:
- a first auxiliary switch of the said second auxiliary switching unit (KX12; DA1; DA12, TX12, DX12) connected between the first voltage line of the first type (P; PP) and the second auxiliary switching point (CX2),
- a second auxiliary switch of the said second auxiliary switching unit (KX22; DA4; DA22, TX22, DX22) connected between the second voltage line of the first type (N; REF) and the said second auxiliary switching point (CX2), and
- a third auxiliary switch of the said second auxiliary switching unit (KX32; TX12, TX22, DX12, DX22, DXP, DXN; TX32, DX32, TX42, DX42; TX32, DX42; TX42, DX32) connected between the third voltage line of the first type (REF; P) and the said second auxiliary switching point (CX2).

4. Device according to Claim 3, **characterized in that**:
- the first auxiliary switch of the second auxiliary switching unit is a diode (DA1) oriented so as to transfer power from the second auxiliary switching point (CX2) to the first voltage line of the first type, and
- the second auxiliary switch of the said second auxiliary switching unit being a diode (DA4) oriented so as to transfer power from the second voltage line of the first type to the said second auxiliary switching point (CX2).

5. Device according to Claim 3, **characterized in that**:
- the first main switch is a transistor (T1) connected to the first voltage line of the first type and oriented so as to transfer power from the said line to the main switching point (CP),
- the second main switch being a diode (D2) connected to the second voltage line of the first type and oriented so as to transfer power from the said line to the main switching point (CP),
- the third main switch including a transistor (T32) oriented so as to transfer power from the third voltage line of the first type to the said main switching point (CP) and a diode (D31) connected in series with the said transistor and oriented in the same way,
- the first auxiliary switch of the first auxiliary switching unit being a transistor (TX1) oriented so as to transfer power from the first voltage line of the first type to the first auxiliary switching point (CX1),
- the second auxiliary switch of the said first auxiliary switching unit being a diode (DX4) oriented so as to transfer power from the second voltage line of the first type to the said first auxiliary switching point (CX1),
- the first auxiliary switch of the second auxiliary switching unit being a diode (DA1) oriented so as to transfer power from the second auxiliary switching point (CX2) to the first voltage line of the first type,
- the second auxiliary switch of the said second auxiliary switching unit being a diode (DA4) oriented so as to transfer power from the second voltage line of the first type to the said second auxiliary switching point (CX2),
- the third auxiliary switch of the said second auxiliary switching unit including a transistor (TX42) oriented so as to transfer power from the third voltage line of the first type to the said second auxiliary switching point (CX2) and a diode (DX32) connected in series with the said transistor and oriented in the same way.

6. Device according to Claim 3, **characterized in that**:
- the first main switch is a diode (D1) connected to the first voltage line of the first type and oriented so as to transfer power from the main switching point (CP) to the said line,
- the second main switch being a transistor (T2) connected to the second voltage line of the first type and oriented so as to transfer power from the said main switching point (CP) to the said line,
- the third main switch including a transistor (T31) oriented so as to transfer power from the said main switching point (CP) to the third voltage line of the first type and a diode (D32) connected in series with the said transistor and oriented in the same way,
- the first auxiliary switch of the first auxiliary switching unit being a diode (DX1) oriented so as to transfer power from the first auxiliary switching point (CX1) to the first voltage line of the first type,
- the second auxiliary switch of the said first auxiliary switching unit being a transistor (TX4) oriented so as to transfer power from the said first auxiliary switching point (CX1) to the second voltage line of the first type,
- the first auxiliary switch of the second auxiliary switching unit being a diode (DA1) oriented so as to transfer power from the second auxiliary switching point (CX2) to the first voltage line of the first type,
- the second auxiliary switch of the said second auxiliary switching unit being a diode (DA4) oriented so as to transfer power from the second voltage line of the first type to the said second auxiliary switching point (CX2),
- the third auxiliary switch of the said second auxiliary switching unit including a transistor (TX32) oriented so as to transfer power from the said second auxiliary switching point (CX2) to the third voltage line of the first type and a diode (DX42) connected in series with the said transistor and oriented in the same way.

7. Device according to Claim 3, **characterized in that**:
- the first main switch is a transistor (T1) connected to the first voltage line of the first type and oriented so as to transfer power from the said line to the main switching point (CP),
- the second main switch being a transistor (T2) connected to the second voltage line of the first type and oriented so as to transfer power from the said main switching point (CP) to the said line,
- the third main switch including two transistors (T31, T32) oriented in opposite directions and two diodes (D31, D32) connected in parallel on the said transistors respectively, each of the said diodes being oriented so as to be conducting when the transistor in parallel with which it is connected is reverse-biased,
- the first auxiliary switch of the first auxiliary switching unit being a transistor (TX1) oriented so as to transfer power from the first voltage line of the first type to the first auxiliary switching point (CX1),
- the second auxiliary switch of the said first auxiliary switching unit being a transistor (TX4) oriented so as to transfer power from the said first auxiliary switching point (CX1) to the second voltage line of the first type,
- the first auxiliary switch of the second auxiliary switching unit being a diode (DA1) oriented so as to transfer power from the second auxiliary switching point (CX2) to the first voltage line of the first type,
- the second auxiliary switch of the said second auxiliary switching unit being a diode (DA4) oriented so as to transfer power from the second voltage line of the first type to the said second auxiliary switching point (CX2),
- the third auxiliary switch of the said second auxiliary switching unit including two transistors (TX32, TX42) oriented in opposite directions and two diodes (DX32, DX42) connected in parallel on the said transistors respectively, each of the said diodes being oriented so as to be conducting when the transistor in parallel with which it is connected is reverse-biased.

8. Device according to Claim 3, **characterized in that**:
- the first main switch is a diode (D1) connected to the first voltage line of the first type and oriented so as to transfer power from the main switching point (CP) to the said line,
- the second main switch being a diode (D2) connected to the second voltage line of the first type and oriented so as to transfer power from the said line to the said main switching point (CP),
- the third main switch including two transistors (T31, T32) oriented in opposite directions and two diodes (D31, D32) connected in parallel on the said transistors respectively, each of the said diodes being oriented so as to be conducting when the transistor in parallel with which it is connected is reverse-biased,
- the first auxiliary switch of the first auxiliary switching unit being a diode (DX1) oriented so as to transfer power from the first auxiliary switching point (CX1) to the first voltage line of the first type,
- the second auxiliary switch of the said first auxiliary switching unit being a diode (DX4) oriented so as to transfer power from the second voltage line of the first type to the said first auxiliary switching point (CX1),
- the first auxiliary switch of the second auxiliary switching unit being a diode (DA1) oriented so as to transfer power from the second auxiliary switching point (CX2) to the first voltage line of the first type,
- the second auxiliary switch of the said second auxiliary switching unit being a diode (DA4) oriented so as to transfer power from the second voltage line of the first type to the said second auxiliary switching point (CX2),
- the third auxiliary switch of the said second auxiliary switching unit including two transistors (TX32, TX42) oriented in opposite directions and two diodes (DX32, DX42) connected in parallel on the said transistors respectively, each of the said diodes being oriented so as to be conducting when the transistor in parallel with which it is connected is reverse-biased.

9. Device according to Claim 3, **characterized in that**:
- the first main switch includes a transistor (T1) oriented so as to transfer power from the first voltage line of the first type to the main switching point (CP) and a diode (D1) connected in parallel on the said transistor and oriented so as to be conducting when the said transistor is reverse-biased,
- the second main switch including a transistor (T2) oriented so as to transfer power from the main switching point (CP) to the second voltage line of the first type and a diode (D2) connected in parallel on the said transistor and oriented so as to be conducting when the said transistor is reverse-biased,
- the third main switch including two transistors (T31, T32) oriented in opposite directions and two diodes (D31, D32) connected in parallel on the said transistors respectively, each of the said diodes being oriented so as to be conducting when the transistor in parallel with which it is connected is reverse-biased,
- the first auxiliary switch of the first auxiliary switching unit including a transistor (TX1) oriented so as to transfer power from the first voltage line of the first type to the first auxiliary switching point (CX1) and a diode (DX1) connected in parallel on the said transistor and oriented so as to be conducting when the said transistor is reverse-biased,
- the second auxiliary switch of the said first auxiliary switching unit including a transistor (TX4) oriented so as to transfer power from the said first main switching point (CX1) to the second voltage line of the first type and a diode (DX4) connected in parallel on the said transistor and oriented so as to be conducting when the said transistor is reverse-biased,
- the first auxiliary switch of the second auxiliary switching unit being a diode (DA1) oriented so as to transfer power from the second auxiliary switching point (CX2) to the first voltage line of the first type,
- the second auxiliary switch of the said second auxiliary switching unit being a diode (DA4) oriented so as to transfer power from the second voltage line of the first type to the said second auxiliary switching point (CX2),
- the third auxiliary switch of the said second auxiliary switching unit including two transistors (TX32, TX42) oriented in opposite directions and two diodes (DX32, DX42) connected in parallel on the said transistors respectively, each of the said diodes being oriented so as to be conducting when the transistor in parallel with which it is connected is reverse-biased.

10. Device according to any one of Claims 1 to 3, **characterized in that**:
- the first main switch (K1) includes a first transistor (T11) connected to the first voltage line of the first type (P) and oriented so as to transfer power from the said line to the main switching point (CP), a second transistor (T12) connected in series with the said first transistor and oriented in the same direction, a first and a second diode (D11, D12) connected in parallel on the said first and the said second transistor respectively, each of the said diodes being oriented so as to be conducting when the transistor in parallel with which it is connected is reverse-biased,
- the second main switch (K2) including a first transistor (T22) connected to the second voltage line of the first type (N) and oriented so as to transfer power from the said main switching point (CP) to the said line, a second transistor (T21) connected in series with the said first transistor and oriented in the same direction, a first and a second diode (D22, D21) connected in parallel on the said first and the said second transistor respectively, each of the said diodes being oriented so as to be conducting when the transistor in parallel with which it is connected is reverse-biased,
- the third main switch (K3) including the said second transistors (T12, T21), the said second diodes (D12, D21) and diodes (DP, DN) connected between the third voltage line of the first type (REF) and connection lines between the said first and the said second transistors (T11, T22, T12, T21).

11. Device according to Claim 10, **characterized in that**
- the first auxiliary switch of the first auxiliary switching unit includes a transistor (TX1) oriented so as to transfer power from the first voltage line of the first type to the first auxiliary switching point (CX1) and a diode (DX1) connected in parallel on the said transistor and oriented so as to be conducting when the said transistor is reverse-biased,
- the second auxiliary switch of the said first auxiliary switching unit including a transistor (TX4) oriented so as to transfer power from the said first auxiliary switching point (CX1) to the second voltage line of the first type and a diode (DX4) connected in parallel on the said transistor and oriented so as to be conducting when the said transistor is reverse-biased.

12. Device according to either Claim 10 or Claim 11, **characterized in that**:
- the first auxiliary switch (KX12) of the said second auxiliary switching unit (UCX2) includes a first diode (DA12) connected to the first voltage line of the first type (P) and oriented so as to transfer power from the second auxiliary switching point (CX2) to the said line, a first transistor (TX12) connected in series with the said first diode and oriented in an opposite direction, and a second diode (DX12) connected in parallel on the said first transistor and oriented so as to be conducting when the said first transistor is reverse-biased,
- the second auxiliary switch (KX22) of the said second auxiliary switching unit (UCX2) including a first diode (DA22) connected to the second voltage line of the first type (N) and oriented so as to transfer power from the said line to the said second auxiliary switching point (CX2), a first transistor (TX22) connected in series with the said first diode and oriented in an opposite direction, and a second diode (DX22) connected in parallel on the said first transistor and oriented so as to be conducting when the said first transistor is reverse-biased,
- the third switch (KX32) of the said second auxiliary switching unit (UCX2) including the said first transistors (TX12, TX22), the said second diodes (DX12, DX22) and diodes (DXP, DXN) connected between the third voltage line of the first type (REF) and connection lines between the said first and the said second diodes (DA12, DA22, DX12, DX22).

13. Device according to any one of Claims 1 to 12, **characterized in that** the transformer windings (N1, N2) have a substantially equal number of turns.

14. Uninterruptible power supply (101) comprising a power supply input (102) on which an AC input voltage is applied, a rectifier (103) connected to the said input, two substantially DC voltage lines of opposite signs connected at the output of the said rectifier, and an inverter (106) connected to the said voltage lines of substantially DC voltage and including an output (107) intended to supply a secured voltage, **characterized in that** the said inverter is a converter device according to one of the preceding claims and supplies from substantially DC voltages a secured AC voltage.
